# EUROPÄISCHE PATENTSCHRIFT

(11) **EP 1 764 304 B1**
(45) Veröffentlichungstag und Bekanntmachung des Hinweises auf die Patenterteilung: **04.12.2013**
(21) Anmeldenummer: 07000072.4
(22) Anmeldetag: 11.03.2003
(51) Int. Cl.: B64D 9/00, B65G 67/00

(54) **System zum Be- und Entladen von Stückgut in einem Laderaum, insbesondere eines Flugzeugs, sowie Zwischenfördereinrichtung oder Fördereinheit hierfür**
System for loading and unloading unit load into a cargo hold, in particular of an aircraft, and intermediate transport device or corresponding unit
Système de chargement et de déchargement de marchandises de détail dans un espace de chargement, en particulier d'une cale d'avion, et système de transport intermédiaire ou unité de transport correspondante

(30) Priorität: 11.03.2002 DE 10210575; 11.03.2002 DE 20212383 U; 21.08.2002 DE 10238249
(43) Veröffentlichungstag der Anmeldung: 21.03.2007
(62) Teilanmeldung aus: 03724913.3
(73) Patentinhaber: Telair International AB, 224 78 Lund (SE)
(72) Erfinder: Helmner, Anders, 23734 Bjärred (SE)
(74) Vertreter: Kuhnen & Wacker

(56) Entgegenhaltungen:
- EP-A- 0 263 540
- WO-A-01/51356
- WO-A-89/02852
- DE-A- 4 238 095
- US-A- 3 356 236
- US-A- 4 050 655
- US-A- 4 544 319

## Beschreibung

Die vorliegende Erfindung betrifft ein System zum Be- und Entladen von Stückgut in einem Laderaum, insbesondere eines Flugzeugs, nach dem Oberbegriff des Anspruchs 1.

Beim Be- und Entladen von Stückgut in Laderäume muß dieses generell zunächst von der Umgebung zur Laderaumöffnung und durch diese hindurch gebracht, im Laderaum nach einem freien Platz gesucht und das Stückgut dort abgelegt bzw. aufgestapelt oder verstaut werden. Das Be- und Entladen von Stückgut in einem Laderaum eines Flugzeugs gestaltet sich besonders schwierig, da das Stückgut zunächst - bei einer auf das nähere Umfeld des Flugzeugs beschränkten Betrachtung - vom Rollfeld hinauf zur Laderaumöffnung im Flugzeugrumpf gebracht, dort - unter Vermeidung jeglicher Beschädigung des Flugzeugrumpfes bzw. der diesen ausbildenden Struktur - entgegen genommen und dann an einen freien Platz im Laderaum des Flugzeugs verbracht und ggf. möglichst kompakt gestapelt oder verstaut werden muß. Hierbei sind die häufig engen Raumverhältnisse ein weiteres Erschwernis, da beispielsweise bei einer Laderaumtiefe von 8 m oder mehr und einer Laderaumhöhe von nur etwa 1,15 m in einer Boeing 737 Personal, das mit dem Be- und Entladen des Flugzeugs betraut ist, nur in gebückter, kniender oder gehockter Haltung arbeiten kann. Dabei muß die Entfernung von der Laderaumöffnung zum hinteren Ende des Laderaums auf den Knien rutschend überwunden werden. Beim Verstauen bzw. Stapeln des Stückguts muß das Personal dieses häufig sich über die Schulter nach hinten drehend aufnehmen, hoch wuchten und nach vorne ablegen. Dabei können Beschädigungen oder Verletzungen der Muskeln, Sehnen oder Bänder als auch des Stützapparats leicht auftreten. Weiter erschwerend kommt hinzu, daß aus Wirtschaftlichkeitsgründen heutzutage wenigstens 5 Tonnen Stückgut innerhalb von weniger als 10 Minuten be- oder entladen werden müssen. Hierbei muß das im Flugzeugrumpf im Laderaum beschäftigte Personal zudem darauf achten, daß weder Stückgut beschädigt noch die Struktur des Laderaums verletzt wird. Dies führt dazu, daß die ohnehin den Stützapparat des betroffenen Personals stark belastenden Bewegungen schnell und unachtsam ausgeführt werden, was das Verletzungsrisiko beim Personal weiter steigert.

Um Stückgut vom Rollfeld zur Laderaumöffnung bzw. in den im Inneren des Flugzeugs direkt hinter der Laderaumöffnung liegenden Nahbereich zu bringen, von dem aus es dann vom Personal im Laderaum verstaut werden kann, sind im Prinzip z.B. folgende Ansätze bekannt:

Die DE 199 61 349 A1 beschreibt ein fahrbares Gerät zum Be- und Entladen von Flugzeugen, mit einem Fahrgestell und einer auf dem Fahrgestell angeordneten Fördereinrichtung, wie beispielsweise einem Förderband. Um mittels dieses fahrbaren Geräts verschiedenartige Lasten wie beispielsweise Stückgut, vom Rollfeld oder von einem auf dem Rollfeld beim Flugzeug ankommenden Transportfahrzeugs in das Flugzeug fördern zu können, wird in der DE 199 61 349 A1 vorgeschlagen, daß dieses fahrbare Gerät einen Hauptförderer aufweist, der in seiner Höhe und in seiner in Förderrichtung verlaufenden Neigung gegenüber dem Fahrgestell verstellbar ist, sowie mindestens einen an einem Längsende des Hauptförderers um eine horizontale Querachse gegenüber diesem verschwenkbaren Übergabeförderer aufweist. Mit einem solchen fahrbaren Gerät kann Stückgut vom Rollfeld nach oben zur Laderaumöffnung des Flugzeugs verbracht und durch diese hindurch ins Flugzeug hinein übergeben werden.

Da jedoch nicht auf jedem Flughafen solcherlei fahrbares Transportgerät zur Verfügung steht, ist in der DE 297 21 959 U 1 vorgeschlagen worden, ein solches Gerät im Flugzeug mitzuführen. Die in der DE 297 21 959 U 1 beschriebene Gepäckladevorrichtung für Flugzeuge mit einem Bandförderer ist auf einer Flugzeugfrachtpalette montiert und im Flugzeugrumpf verstaut. Beim Betrieb wird der Bandförderer aus der Ladeöffnung des Flugzeugs herausgefahren, zum Rollfeld nach unten geschwenkt, die erforderliche Länge eingestellt und mit dem unteren Ende dann auf dem Rollfeld abgestützt, so daß Stückgut vom Rollfeld zur Laderaumöffnung hinauf befördert oder aus dieser heraus hinunter transportiert werden kann.

Die WO 98/54073 beschreibt ein mit dessen vorderen Abschnitt durch eine Laderaumöffnung in den Laderaum eines Flugzeugs hineinführbares, dort wiederum über den Laderaumboden vermittels Rollen verfahrbares Förderorgan, das ein vom Rollfeld bis zum hinteren Ende des Laderaum führendes Förderband bereit stellen soll, zur Unterstützung des auch hier manuell von einer Person auszuführenden Be- und Entladevorgangs. Zum Betrieb des Förderorgans wird dieses auf dem Rollfeld an das Flugzeug herangeführt, ein erster Abschnitt einer schiefen Ebene gleichend auf die Höhe der Laderaumöffnung gebracht, ein weiterer Abschnitt in die Laderaumöffnung hineingeführt, dort um 90° umgebogen und dann ein weiterer Abschnitt parallel zur Bordwand im Laderaum von der Laderaumöffnung bis zum hinteren Ende des Laderaums erstreckt. Ein zusätzlicher Tisch, der am hinteren Ende auf dem Boden aufgerichtet wird, soll sich über die gesamte Breite des Laderaums erstrecken und kann in der Höhe variiert werden. Damit können Koffer, Säcke oder dergleichen Güter Be- und Entladen werden, wobei diese Güter beim Beladen vermittels des Förderbandes vom Rollfeld bis zum Ende des Förderbandes im Laderaum vor den Tisch transportiert und dort von der am Tisch knieenden Person auf den Tisch gezogen und über diesen weiterziehend dann oben auf den aufzuschichtenden Stückgutstapel geschoben werden. Das in der WO 98/540734 beschriebene Gerät hat zum Nachteil, daß sowohl bei unsachgemäßer Handhabung des Tisches als auch bei nicht sachgemäßer Handhabung des Förderorgans eine Verletzung bzw. Beschädigung der Flugzeugstruktur zwangsläufig zu befürchten ist. Wenn der Tisch mit darauf liegendem Stückgut in belastetem Zustand in der Höhe verändert wird, besteht die Gefahr, daß dessen an die Bordwand angrenzenden Enden diese sofort beschädigen. Beim Einführen des extrem langen und unhandlichen Förderbandes ist eine Beschädigung der Laderaumöffnung nicht auszuschließen. Zudem ist dieses Hilfsgerät wenig hilfreich, da es immer dann, wenn eine Stückgutreihe aufgeschichtet ist, um ein Stück zurückgefahren, neu positioniert und mit dem ebenfalls neu auszurichtenden Tisch verbunden werden muß.

In der DE 100 07 332 A1 ist eine alternative Ausführungsform eines auf dem Rollfeld verfahrbaren Basisfahrzeugs mit einem bis in den Laderaum hineinreichenden endlosen Förderband diskutiert. Die DE 100 07 332 A1 schlägt ein reversierbares Fördermittel für Stückgüter mit schwenkbarem und in der Höhe und Länge verstellbaren Ausleger zum Be- und Entladen von Reisegepäckstücken bei Passagierflugzeugen vor. Zwischenübergabestationen sollen vermieden werden. Den Umschlag der Gepäckstücke bzw. das Verstauen und Entnehmen derselben im Laderaum bewerkstelligen auch hier wiederum Personen vor Ort von Hand.

Um die Arbeit des Personals im Laderaum zu erleichtern, ist von der Anmelderin beispielsweise in der DE 42 38 095 A1 eine Beladevorrichtung für einen Laderaum eines Flugzeugs vorgeschlagen worden. Diese im rauhen Alltag beim Be- und Entladen von Flugzeugen bewährte Laderaumbeladevorrichtung wird von der Anmelderin u. a. mit dem Prospekt "The sliding carpet loading system" erfolgreich beworben. Diese den Boden des Laderaums flächig abdeckende Transporteinrichtung dient zur, insbesondere taktweisen, Förderung des Stückgutes in Richtung auf das Innere des Laderaumes bzw. dessen hinteres Ende beim Beladen bzw. von diesem weg beim Entladen, wobei die Transporteinrichtung mit deren vorderem Ende bis in den Bereich der Laderaumöffnung im Flugzeugrumpf reicht, und ist in einer besonders erfolgreichen Ausführungsform als Transportteppich ausgestaltet.

Die Anmeldeschrift EP 0 263 540 A1 offenbart ein modulares Frachtbeladungs- und Entladungssystem, das in einem unteren Abteil eines Flugzeugs angebracht ist. Das System umfasst eine zur Ladeluke ausgerichtete Einheit und mehrere längsausgerichtete Einheiten mit Förderbändern zum Befördern von Frachtcontainern. Die modularen Einheiten können auf dem Deck des untern Abteils durch einen Schnellverschlussmechanismus schnell angebracht werden.

Die Anmeldeschrift WO 01/51356 A1 offenbart ein Gerät zum Beladen und Entladen von Luftfahrzeugen. Das Gerät weist einen höheneinstellbaren und kippbaren ersten Förderer auf, der die Fracht zwischen einem Bereich außerhalb des Frachtabteils und einem zweiten Förderer befördert. Der zweite Förderer weist ein erstes Ende und ein zweites Ende auf und ist zumindest teilweise von dem Gerät in das Frachtabteil ausfahrbar. Der zweite Förderer hat eine Folge von Fördereinheiten, von denen eine erste Endfördereinheit an dessen erstem Ende angeordnet ist. Jede Fördereinheit weist einen Satz Räder auf und die Fördereinheiten sind abwechselnd mittels Kopplungsteilen zwischenverbunden, die eine seitliche, wechselweise Kippbewegung der Fördereinheiten gestatten.

Diese Geräte bzw. Transporteinrichtungen helfen zwar, den Einsatz menschlicher Arbeitskraft im Laderaum zu erleichtern oder zu reduzieren, sie machen jedoch den Einsatz menschlicher Arbeitskraft, insbesondere im Bereich der Laderaumluke, immer noch erforderlich. Personal muß auch weiterhin in äußerst unbequemer Arbeitshaltung das vom äußeren Förderorgan vom Rollfeld zur Laderaumöffnung hinauf beförderte Gepäck bzw. Stückgut entgegennehmen und über die Breite des Flugzeugrumpfes auf dem vorderen Ende der beispielsweise als Transportteppich ausgebildeten Transporteinrichtung im Laderaum ablegen und mit deren Hilfe sukzessive in das Innere des Laderaums befördern. Dementsprechend muß zum Entladen wiederum Personal eingesetzt werden, das mittels der Transporteinrichtung im Laderaum das Stückgut sukzessive zu sich in den Bereich der Laderaumöffnung heranholt, das Stückgut aufnimmt, in beschwerlicher Haltung, sei es gebückt oder gehockt zum in die Laderaumöffnung hineinragenden Ende der äußeren Fördereinrichtung schleppt, dort aufgibt und mit der äußeren Fördereinrichtung dann zum Rollfeld hinunter befördert.

Zudem ist das mit diesen Arbeiten betraute Personal häufig schlecht bezahlt, unzureichend ausgebildet und damit nur ungenügend motiviert. Dementsprechend kommt es oft zu versehentlichen Beschädigungen der Flugzeugstruktur im Laderaum und insbesondere im Bereich der Laderaumöffnung, obgleich diese ausdrücklich vermieden werden sollen. Dies führt dann bei deren Auftreten zu immensen Kosten aufgrund der erforderlichen Reparaturen und des damit verbundenen Stillstands des Flugzeugs.

Es ist eine Aufgabe der vorliegenden Erfindung, ein System sowie eine hierfür geeignete Zwischenfördereinrichtung vorzuschlagen, mit dem bzw. mit der die bekannten Transporteinrichtungen im Laderaum des Flugzeugs mit den außerhalb des Flugzeugs befindlichen Förderorganen so zu einem Gesamtkonzept kombiniert werden können, daß Stückgut vom Rollfeld beim Beladen in den Laderaum verbracht und dort verstaut und beim Entladen wieder aus dem Laderaum zurück auf das Rollfeld transportiert werden kann, ohne dabei die Gesundheit des eingesetzten Personals zu gefährden.

Schließlich ist es Aufgabe der vorliegenden Erfindung, eine Zwischenfördereinrichtung anzugeben, mit der ohne Verfügbarkeit bekannter Transporteinrichtungen im Laderaum des Flugzeugs und lediglich mit Verfügbarkeit außerhalb des Flugzeugs befindlicher bis in den Laderaum hinein reichender Förderorgane so ein Gesamtkonzept realisiert werden kann, daß Stückgut vom Rollfeld beim Beladen in den Laderaum verbracht und dort verstaut und beim Entladen wieder aus dem Laderaum zurück auf das Rollfeld transportiert werden kann, ohne dabei die Gesundheit des eingesetzten Personals zu gefährden.

Diese Aufgabe wird gelöst durch die Merkmale des Anspruchs 1.

Die vorliegende Erfindung schlägt erstmals ein System zum Be- und Entladen von Stückgut in einem Laderaum, insbesondere eines Flugzeugs, vor, mit einer den Boden des Laderaums flächig abdeckenden Transporteinrichtung zur, insbesondere taktweisen, Förderung des Stückgutes in Richtung auf das innere Ende des Laderaums beim Beladen bzw. von diesem weg beim Entladen, wobei die Transporteinrichtung mit deren vorderen Ende bis in den Bereich der Laderaumöffnung im Flugzeugrumpf reicht, und mit einem der Außenseite des Flugzeuges an die Laderaumöffnung anschließenden Förderorgans zum Transport des Stückgutes zwischen der Rollfeldebene und der Laderaumöffnung, wobei erstmals vorgesehen ist, daß zwischen den flugzeugseitigen Ende des Förderorgans und dem vorderen Ende der Transporteinrichtung im Laderaum wenigstens eine Zwischenfördereinrichtung angeordnet ist, mit der das Stückgut beim Beladen zunächst in Querrichtung zur Flugzeuglängsachse tiefer in den Flugzeugrumpf hinein förderbar ist und sodann in Flugzeuglängsrichtung förderbar und auf dem vorderen Ende der Transporteinrichtung im Laderaum ablegbar ist, und mit der beim Entladen über das vordere Ende der Transporteinrichtung hinaus in die Ebene der Laderaumöffnung gefördertes Stückgut quer zur Flugzeuglängsachse durch die Laderaumöffnung hinauf weg förderbar ist.

Damit kann erstmals in vorteilhafter Weise auf den Einsatz menschlicher Arbeitskraft im Laderaum beim Be- und Entladen von Stückgut vollständig verzichtet werden. Auf diese Weise werden nicht nur die damit verbundenen Personalkosten eingespart und somit Betriebskosten gesenkt, sondern zugleich das Beschädigungsrisiko der Struktur im Laderaum gegen Null reduziert. Mit der Reduzierung des Beschädigungsrisikos wird in vorteilhafter Weise zugleich das Risiko der Nutzungsausfallzeit für Reparaturen solcher Beschädigungen und damit die enorm hohen Reparaturkosten im Prinzip auf Null herunter gefahren. Ferner bietet das erfindungsgemäße System den Vorteil, daß es den Laderaum automatisch beund entlädt und zu jeder Tages- und Nachtzeit die vom Betreiber gewünschten Mindestdurchsatzraten von wenigstens 5 Tonnen innerhalb etwa 10 Minuten ausfallsicher auch bei Streiks oder ähnlichen Ereignissen garantiert. Weiterhin wird durch das erfindungsgemäße System erstmals bei einer automatischen Be- und Entladung des Laderaums eine optimale Ausnutzung der verfügbaren Laderaumfläche als auch des verfügbaren Laderaumvolumens ermöglicht, da in einer beispielhaften Ausführungsform das erfindungsgemäße System mit geeigneten Sensoren, Kameras, Regelkreisen und/oder künstlicher Intelligenz ausgestaltet werden kann, so daß das Stückgut nicht nur automatisch sondern gezielt dort im Laderaum abgelegt bzw. verstaut werden kann, wo beispielsweise noch Lücken frei sind.

Hierzu kann das erstmalig vorgeschlagene System und insbesondere die hierfür vorgesehene Zwischenfördereinrichtung beispielsweise aus besonders leichten Materialien, wie zwischenzeitlich verfügbares hochfestes Aluminium, Kohlefaserverbundwerkstoffen oder Composites hergestellt werden. Bei Verwendung entsprechend steifer Profile aus solchen Materialien ist ein derart zufriedenstellend geringes Gesamtgewicht der Zwischenfördereinrichtung realisierbar, daß ein Verbleib der Zwischenfördereinrichtung im Laderaum des Flugzeugs hinsichtlich dessen maximal verfügbarer Transportkapazität nicht negativ ins Gewicht fällt. Derlei biegesteife und zugleich extrem leichte Profile bieten nicht nur den Vorteil eines insgesamt besonders geringen Gewichts der Zwischenfördereinrichtung, sie ermöglichen zudem die Herstellung einer Zwischenfördereinrichtung, die problemlos den hohen Belastungen im alltäglichen Betrieb gewachsen ist, wie beispielsweise mit Blick auf das teilweise hohe Gewicht von damit zu förderndem Stückgut oder mit Blick auf die hohen Lastspitzen bei großen Maßendurchsätzen an Stückgut für ein besonders schnelles Be- und/oder Entladen.

Bei einer ebenfalls bevorzugten Variante des erfindungsgemäßen Systems kann die Zwischenfördereinrichtung mechanisch mit dem auf dem Rollfeld verfahrbaren Förderorgan verbunden werden. Dabei kann das auf dem Rollfeld verfahrbare Förderorgan an dessen der Laderaumöffnung zugewandten Ende um die Zwischenfördereinrichtung im wesentlichen geradlinig verlängert werden. Dies bietet den Vorteil, daß weniger auf das Gewicht zu achten ist, und die Zwischeneinrichtung damit materialtechnisch preiswerter und dennoch ausreichend fest bzw. belastbar ausgestaltet werden kann. Bei dieser bevorzugten Kombination ist eine Beschädigung des direkten Bereichs um die Laderaumöffnung nicht gänzlich auszuschließen, da die Zwischenfördereinrichtung quer zur Flugzeuglängsrichtung durch die Laderaumöffnung eingebracht und positioniert werden muß. Bei entsprechend verständiger Arbeitsweise ist dieses Beschädigungsrisiko jedoch unbeachtlich. Zudem ist eine Beschädigung des Laderaums als solchem bzw. der diesen ausbildenden Struktur auf jeden Fall auszuschließen.

Mit dem erfindungsgemäßen System und insbesondere mit der hierfür vorgesehenen Zwischenfördereinrichtung kann die Zeit für das Be- und Entladen eines Flugzeugs verkürzt und somit die Betriebskosten gesenkt werden.

So können bei dem erfindungsgemäßen System die beim Be- und Entladen bewegten Stückgüter auf der Transporteinrichtung im Laderaum beim Beladen gezielt abgelegt und beim Entladen von dort gezielt aufgenommen bzw. weg gefördert werden. Dies bietet den großen Vorteil, daß der verfügbare Laderaum und insbesondere dort freie Flächen optimal mit Ladegut, Stückgut, Gepäckstücke oder dgl. belegt werden kann. Beispielsweise kann bei einer Automatisierung vermittels entsprechender Sensoren, Kameras, Regelkreisen, künstlicher Intelligenz oder dgl. der Beladungszustand des Laderaums permanent überwacht und das System entsprechend darauf abgestellt werden.

Hierfür ist in einer weiter bevorzugten Ausführungsform vorgesehen, daß über dem Boden des Laderaums horizontal zwischen der Zwischenfördereinrichtung und dem Boden des Laderaums im Bereich der Laderaumöffnung eine den Boden des Laderaums als auch den bodenseitigen Bereich der Laderaumöffnung flächig abdeckende Schale angeordnet ist. Diese Schale, insbesondere Auffangschale, bietet zugleich den Vorteil, daß auch bei bis in den unteren Bereich des Rumpfes hinein gezogenen Laderaumöffnungen die volle Breite des Laderaums mit Stückgut beladen werden kann, ohne das die Gefahr besteht, daß Stückgut bei einem nie gänzlich auszuschließenden "über Eck Abrutschen" von dem der Laderaumöffnung zugewandten Ende des äußeren Förderorgans herunter und zwischen dem Förderorgan und der Laderaumöffnung hindurch im schlimmsten Fall bis zum Rollfeld hinunter fällt.

In einer weiter bevorzugten Ausführungsform ist die Schale, insbesondere Auffangschale, die auch als "Door Way Unit" (kurz: DWU) bezeichnet wird, entlang einer Linie parallel zur Flugzeuglängsachse um- oder einklappbar. Damit wird in weiter vorteilhafter Weise sichergestellt, daß nach einem Be- oder Entladevorgang jener Abschnitt dieser Schale bzw. DWU, welcher der Laderaumöffnung benachbart ist, aus dem Nahbereich der Laderaumöffnung heraus ins Innere des Laderaums zur Mitte hin umgeklappt werden kann, so daß danach die Laderaumöffnung vollständig frei gegeben und mit der Laderaumtüre verschließbar ist.

Gemäß einer weiter bevorzugten Ausführungsform ist vorgesehen, daß die Transporteinrichtung im Laderaum ein Transportteppich ist. Dies bietet neben dem Vorteil einer kontinuierlichen, diskontinuierlichen oder taktweisen Förderung des Stückgutes ins Innere des Laderaums hinein zudem ein wesentliches Platzsparpotential, da ein solcher Transportteppich eine besonders geringe Bauhöhe aufweist und damit wenig Staukapazität des Laderaums für den Einbau einer z.B. als Transportteppich ausgebildeten Transporteinrichtung verloren geht.

Bei einer weiter bevorzugten Ausführungsform weist die Zwischenfördereinrichtung wenigstens ein in Förderrichtung längenveränderbares erstes Förderorgan, vorzugsweise ein Förderband auf. Dieses nimmt beim Beladen Stückgut im Bereich der Laderaumöffnung vom flugzeugseitigen Ende des äußeren Förderorgans entgegen und fördert dieses quer zur Flugzeuglängsachse weiter, wobei sich an dessen flugzeugrumpfinneren Ende ein weiteres Förderorgan, vorzugsweise ein Förderband anschließt, welches das Stückgut im ersten Förderorgan entgegennimmt und in Flugzeuglängsrichtung zum vorderen Ende der im Laderaum vorhandenen Transporteinrichtung befördert. Damit wird in vorteilhafter Weise das Entgegennehmen von Stückgut im Bereich der Laderaumöffnung und dessen Weitertransport 90° um die Ecke auf engstem Raum, und zugleich optimal an die jeweilige Breite unterschiedlicher Flugzeugtypen angepaßt, sichergestellt.

Entsprechend einer weiter bevorzugten Ausführungsform des erfindungsgemäßen Systems nimmt das zweite Förderorgan beim Entladen Stückgut vom vorderen Ende der im Laderaum vorhandenen Transporteinrichtung auf und fördert dies in Flugzeuglängsrichtung weg und übergibt es an das erste Förderorgan, welches das Stückgut quer zur Flugzeuglängsachse zur Laderaumöffnung fördert und an das äußere Förderorgan zur Weiterförderung übergibt. Damit wird in vorteilhafter Weise auch ein Entladen des Stückguts mit einer Bewegung desselben 90° um die Ecke aus dem Laderaums heraus in den Nahbereich der Laderaumöffnung hinein garantiert.

Gemäß einer weiter bevorzugten Ausführungsform des Systems verfügt das flugzeugrumpfinnere Ende des ersten Förderorgans der Zwischenfördereinrichtung über eine Schulter, die an einer im Gepäckladeraum senkrecht orientierten ersten Schiene längs derselben vertikal verschieblich angelenkt ist. Damit kann in vorteilhafter Weise eine Höhenverstellung des Endpunktes des ersten Förderorgans realisiert werden. Somit ist sichergestellt, daß Stückgut über die volle Höhe des Laderaums gestapelt werden kann.

Entsprechend einer weiter bevorzugten Ausführungsform des Systems ist vorgesehen, daß die senkrecht orientierte erste Schiene ihrerseits von wenigstens einer an der Decke oder im Boden befestigten waagerecht orientierten zweiten Schiene geführt ist. Damit kann eine Verschiebung des Anlenkpunktes quer zur Flugzeuglängsachse über die Breite des Flugzeugrumpfes sichergestellt werden. Somit ist in vorteilhafter Weise garantiert, daß Stückgut nicht nur über die gesamte Höhe an einem Punkt des Laderaums sondern über dessen gesamte Breite und aufgrund der in die Tiefe fördernden Transporteinrichtung auch über dessen gesamte Tiefe und damit über dessen gesamtes Volumen gestapelt bzw. hinein transportiert und beim Entladen natürlich wieder herausgeholt werden kann.

Beispielsweise ist das zweite Förderorgan in Flugzeuglängsrichtung längenveränderbar. Auf diese Weise kann der Operationsradius der Zwischenfördereinrichtung ebenfalls vorteilhaft vergrößert werden. Insbesondere ist damit sichergestellt, daß bei besonders breiten Laderaumöffnungen im Vergleich zu einer relativ schmalen Zwischenfördereinrichtung Stückgut dennoch in Flugzeuglängsrichtung bis zum vorderen Ende der im Laderaum befindlichen Transporteinrichtung gefördert und an diese übergeben wird.

Das zweite Förderorgan der Zwischenfördereinrichtung ist ein Förderband, das über einer darunter angeordneten steifen Gleitplatte verläuft, wobei die Gleitplatte mit dem Förderband zwischen zwei Stückgüter einschiebbar ist und wobei das obere Stückgut mit dem Förderband wegförderbar ist. Damit kann eine kostengünstige Variante zum möglichst effizienten Entladen des Laderaums bereitgestellt werden.

Die Zwischenfördereinrichtung zum Be- und Entladen von Stückgut in Laderäumen von Flugzeugen, wird zur Verwendung in einem vorstehend diskutierten System zum Be- und Entladen von Stückgut, vorgeschlagen, bei der erstmals vorgesehen ist, daß diese wenigstens ein in Förderrichtung längenveränderbares erstes Förderorgan, vorzugsweise ein Förderband, aufweist, das beim Beladen Stückgut im Bereich der Laderaumöffnung vom flugzeugseitigen Ende des äußeren Förderorgans entgegennimmt und quer zur Flugzeuglängsachse weiterfördert. Dabei schließt sich an dessen flugzeugrumpfinneres Ende ein weiteres Förderorgan an, vorzugsweise ein Förderband, welches das Stückgut vom ersten Förderorgan entgegen nimmt und in Flugzeuglängsrichtung zum vorderen Ende der im Laderaum vorhandenen Transporteinrichtung weiter fördert und auf dieser ablegt. Beim Entladen nimmt das zweite Förderorgan der Zwischenfördereinrichtung Stückgut vom vorderen Ende der im Laderaum vorhandenen Transporteinrichtung auf, fördert dieses in Flugzeuglängsrichtung weg und übergibt es an das erste Förderorgan der Zwischenfördereinrichtung, welches das Stückgut quer zur Flugzeuglängsachse zur Laderaumöffnung weiter transportiert und dort an das äußere Förderorgan zur Weiterförderung übergibt.

In einer weiter bevorzugten Ausführungsform der erfindungsgemäßen Zwischenfördereinrichtung verfügt das flugzeugrumpfinnere Ende des ersten Förderorgans der Zwischenfördereinrichtung über eine Schulter, mittels der es an einer beispielsweise im Gepäckladeraum im wesentlichen senkrecht orientierten ersten Schiene längs derselben vertikal verschieblich angelenkt ist. Damit kann in vorteilhafter Weise eine Höhenverstellung des dem Flugzeuginneren zugewandten Ende des ersten Förderorgans über die gesamte Höhe des Gepäckladeraums sichergestellt werden. Damit wird, wie vorstehend bereits zum System diskutiert, der Vorteil erreicht, daß die gesamte Ladehöhe des Gepäckraums nutzbar wird. Hierbei kann im Falle der im Flugzeug verbleibenden Variante die senkrecht orientierte Schiene mit deren oberen und/oder unteren Ende gegen eine zweite im wesentlichen waagrecht orientierte Schiene in deren Längsrichtung verfahrbar abgestützt sein. Die waagrechte Schiene ihrerseits kann gegen die Struktur des Laderaums in geeigneter Form abgestützt werden. Im Falle der mit dem äußeren Förderorgan verbundenen Variante kann die senkrechte Schiene über ein entsprechendes Gestell oder über einen geeignet ausgebildeten Rahmen waagerecht verschieblich geführt werden. Es ist ebenso denkbar, eine Anlenkung der Schulter des Zwischenförderorgans zuerst an einer im wesentlichen waagerecht orientierten Schiene vorzusehen, die ihrerseits längs einer senkrecht orientierten Schiene verschieblich gelagert ist, wobei die senkrecht orientierte Schiene beim Verbleib des Zwischenförderorgans im Flugzeug sich gegen die Flugzeugstruktur abstützen kann und bei einer Kombination mit dem auf dem Rollfeld verfahrbaren Förderorgan über einen Rahmen, ein Gestell oder dergleichen mit diesem verbunden werden kann.

Dementsprechend wird in einer weiter bevorzugten Ausführungsform der Zwischenfördereinrichtung vorgeschlagen, daß die senkrecht orientierte erste Schiene ihrerseits von wenigstens einer an der Decke und dem Boden befestigten waagerecht orientierten zweiten Schiene geführt ist, zur Verschiebung des Anlenkpunktes quer zur Flugzeuglängsachse.

Damit ist nicht nur sichergestellt, daß die gesamte Breite des Laderaums nutzbar wird, sondern es wird auch eine möglichst stabile, verwindungsfreie Konstruktion erzielt. Anstelle einer am Boden oder an der Decke befestigten, waagerecht orientierten zweiten Schiene kann die erste Schiene auch in waagerechter Richtung in einem entsprechend ausgebildeten Gestell oder Rahmen, welches seinerseits am äußeren Förderorgan befestigt ist, geführt sein, so daß auch bei der Variante einer am äußeren Förderorgan befestigten Zwischenfördereinrichtung die volle Nutzbarkeit der gesamten Laderaumbreite und Tiefe als auch Höhe in vorteilhafter Weise gewährleistet ist.

Das erfindungsgemäße System ist wesentlich einfacher zu warten, was zu deutlich geringeren Instandhaltungskosten führt. Unabhängig davon ist das erfindungsgemäße System einfach in dessen Handhabung bzw. Bedienung, so daß damit arbeitendes Personal nicht aufwändig geschult werden muß. Wenn man dann noch berücksichtigt, daß bereits ein kleinerer Flughafen beispielsweise fünf Fördereinrichtungen benötigt, um damit gleichzeitig gerade einmal fünf Flugzeuge abfertigen zu können, was noch kein großes Flugaufkommen darstellt, so ist man bei Lösungen nach dem Grundprinzip der DE 100 07 332 A1 oder der WO 98/54073 schnell bei Investitionsvolumina größer als EUR 1.000.000, denen dann im genannten Beispiel lediglich Investitionen von im schlimmsten Fall EUR 200.000 beim erfindungsgemäßen System gegenüberstünden. Der wirtschaftliche Vorteil ist damit unübersehbar.

Darüber hinaus bietet das erfindungsgemäße System den unschätzbaren Vorteil, daß aufgrund der leichten Handhabbarkeit eine Positionierung der Zwischenfördereinrichtung zur Überbrückung der Distanz vom der Laderaumöffnung zugewandten Ende des äußeren bodengestützten Förderorgans hinein in den Laderaum und damit durch die Laderaumöffnung hindurch ohne jegliche Beschädigungsgefahr des Flugzeugrumpfes oder der Laderaumöffnung geschehen kann, denn das üblicherweise schwer manövrierbare bodengestützte äußere Förderorgan braucht nicht mehr bis in die Laderaumöffnung hinein verfahren zu werden, sondern kann in ausreichendem Sicherheitsabstand zur Laderaumöffnung positioniert werden. Damit ist eine Beschädigung des Flugzeugrumpfes und der Laderaumöffnung ausgeschlossen.

Schlußendlich können mit dem erfindungsgemäßen System und der hierfür vorgesehenen Zwischenfördereinrichtung die Zeit für das Be- und Entladen eines Flugzeugs wesentlich verkürzt und somit die Betriebskosten gesenkt werden.

Beispielsweise kann die Zwischenfördereinrichtung, an deren Unterseite im Überlappungsbereich mit dem äußeren Förderorgan ein Gleitelement, vorzugsweise ein Rad, aufweisen. Damit wird eine verschiebliche Abstützung der Zwischenfördereinrichtung auf der Oberseite des äußeren Förderorgans in dessen Endbereich erreicht. Somit kann das im Laderaum des Flugzeugs befindliche Ende der Zwischenfördereinrichtung über die Breite des Laderaums bzw. des Flugzeugrumpfes nach Belieben je nach Bedarf verfahren werden. Dabei genügt in vorteilhafter Weise hierfür bei einer bevorzugten Ausführungsform der Zwischenfördereinrichtung bereits eine Gesamtlänge derselben von etwa 1,50 m. Alternativ könnte die gesamte Länge der Zwischenfördereinrichtung variabel gehalten werden.

Beispielsweise kann die Zwischenfördereinrichtung im Überlappungsbereich mit dem äußeren Förderorgan ein Ausleger angelenkt sein, der sich mit dessen, von der Zwischenfördereinrichtung wegweisenden Ende vermittels eines dort angelenkten Gelenks gegen eine Gleitschiene abstützt, die parallel zur Längsrichtung des äußeren Förderorgans orientiert und an diesem befestigt ist. Damit wird eine verschiebliche Abstützung der Zwischenfördereinrichtung in Förderrichtung des äußeren Förderorgans erreicht. Somit ergibt sich in vorteilhafter Weise eine Art Zwangsführung der Zwischenfördereinrichtung und damit eine stets korrekte Ausrichtung des sich auf dem Endbereich des bodengestützten äußeren Förderorgans abstützenden Anfangs der Zwischenfördereinrichtung, so daß beim Betrieb immer sichergestellt ist, daß herangefördertes Stückgut problemlos und fehlerfrei von der äußeren bodengestützten Fördereinrichtung zur Zwischenfördereinrichtung übergeben wird. Gleichzeitig erlaubt diese Art der verschieblichen Abstützung der Zwischenfördereinrichtung eine kräfteschonende und leichte Verschieblichkeit derselben mit einer gleichzeitig sichergestellten einfachen Handhabbarkeit.

Dabei kann bei Bedarf im Bereich des gegen die Gleitschiene sich abstützenden Gelenks erforderlichenfalls zusätzlich eine Bremseinrichtung vorgesehen werden, die eine allzu leichte Verschieblichkeit der Zwischenfördereinrichtung bei Bedarf gezielt hemmen hilft. Ferner könnte zur Arretierung an eine Feststellbremse gedacht werden.

Des weiteren bietet der Ausleger den Vorteile, daß der Anfang der Zwischenfördereinrichtung zwar stets in Förderrichtung des äußeren bodengestützten Förderorgans zwangsgeführt ist, zugleich aber das im Laderaum befindliche Ende der Zwischenfördereinrichtung relativ zu deren Anfang verschwenkt werden kann, so daß die im Laderaum tätige Person die Gesamtausrichtung der Zwischenfördereinrichtung stets auf den laufenden Arbeitsprozeß optimal anpassen kann. Auf diese Weise ist über die gesamte Breite des Laderaums bzw. des Flugzeugrumpfes im Bereich der Ausdehnung der Laderaumöffnung jeder gewünscht Ablagepunkt eines Stückgutes auf der im Laderaum befindlichen, diesen flächig abdeckenden Transporteinrichtung erreichbar.

Beispielsweise kann das vordere Ende der Transporteinrichtung im Laderaum zugewandte Ende der Zwischenfördereinrichtung in der Höhe veränderbar sein relativ zum dem äußeren Förderorgan zugewandten Anfang der Zwischenfördereinrichtung. Damit wird in vorteilhafter Weise sichergestellt, daß herangefördertes Stückgut auch in der Höhe im Laderaum jeden Punkt des Laderaumquerschnitts erreichen kann, ohne daß die im Laderaum tätige Person hierfür beispielsweise durch aktives Anheben des Stückgutes irgendwelche Kräfte aufbringen müßte.

Beispielsweise kann ein Endabschnitt der Zwischenfördereinrichtung derart um eine Achse quer zur Förderrichtung der Zwischenfördereinrichtung verschwenkbar sein, daß dieser Endabschnitt horizontal ausrichtbar ist. Damit wird in vorteilhafter Weise erreicht, daß Stückgut, das auf seiner Förderstrecke schlußendlich an diesem Endabschnitt angekommen ist, zugleich jedenfalls dann derart horizontal ausgerichtet ist, daß es ohne große Mühen direkt von dort auf bereits im Laderaum befindliches Stückgut oder, sofern noch kein Stückgut im Laderaum verstaut sein sollte, direkt auf der im Laderaum befindlichen Transporteinrichtung abgelegt werden kann. Umgekehrt ergibt sich beim Entladen der Vorteil, daß durch die im Laderaum befindliche Transporteinrichtung herangefördertes Stückgut ohne weiteren Kraftaufwand auf den stets horizontal ausgerichteten Endabschnitt der Zwischenfördereinrichtung gezogen und dann mit einer Weiterförderung hinaus aus dem Laderaum zugeführt werden kann.

Beispielsweise kann ein Anfangsabschnitt der Zwischenfördereinrichtung mit einem vorbestimmten Neigungswinkel, vorzugsweise zwischen 10° bis 30°, zum Neigungswinkel des äußeren Förderorgans orientiert sein. Mit einem derart sanften rampenähnlichen Übergang vom äußeren bodengestützten Förderorgan zur Zwischenfördereinrichtung ist vorteilhaft sichergestellt, daß Stückgut jeglicher Art problemlose vom äußeren Förderorgan zur Zwischenfördereinrichtung übergeben werden kann. Stauungen oder gar Aussetzer sind in diesem Bereich vermieden. Zugleich ergibt sich mit diesem Neigungswinkel ein guter Kompromiß zwischen einem sanften Übergang von dem äußeren Förderorgan zur Zwischenfördereinrichtung und dem in diesem Bereich für konstruktive Maßnahmen, wie beispielsweise der Anbindung des Auslegers, der Unterbringung beispielsweise eines Elektromotors zum Antrieb der Förderbänder, der Ausbildung eines abstützenden Rahmens zur Anlenkung des vorgenannten Gleitelements oder Stützrades, usw., bereitzustellenden Bauraumes.

Beispielsweise kann die Zwischenfördereinrichtung mit deren Förderrichtung für die Förderung von Stückgut im wesentlichen quer zur Flugzeuglängsachse um einen Winkelbereich von etwa -30° bis +30° relativ zur Förderrichtung des äußeren Förderorgans verschwenkbar sein. Die Verschwenkbarkeit in einem Bereich von etwa -30° bis +30° gewährleistet in vorteilhafter Weise die gewünschte Förderung des Stückgutes im wesentlichen quer zur Flugzeuglängsachse bzw. in die Tiefe des Laderaums hinein, ohne dabei auf eine angemessene Variation des Endbereich des Zwischenfördereinrichtung in Flugzeuglängsrichtung verzichten zu müssen, so daß damit ein von der Breite der Laderaumöffnung und der Breite des Laderaumquerschnittes aufgespannter Bereich problemlos mit dem Endabschnitt der Zwischenfördereinrichtung erreicht werden kann.

Beispielsweise können Teile der tragenden Struktur der Zwischenfördereinrichtung aus leichten Werkstoffen, wie beispielsweise Aluminium oder Faserverbundwerkstoffen hergestellt sein. Damit ist gewährleistet, daß der ausgehend vom Endabschnitt des äußeren bodengestützten Förderorgans auskragende Teil der Zwischenfördereinrichtung, der je nach Positionierung des Endes der Zwischenfördereinrichtung beim Be- und Entladen von Stückgut im Laderaum mal weiter und mal weniger weit auskragt, immer so leicht gehalten werden kann, daß der gesamte Schwerpunkt der Zwischenfördereinrichtung im Überlappungsbereich mit dem äußeren Förderorgan verbleibt, so daß ein Überkippen des auskragenden Teiles bereits aufgrund der eigenen Gewichtsverteilung ausgeschlossen ist. Dies bietet den zusätzlichen Vorteil, daß im Betrieb und damit im mit Stückgut beladenen Zustand lediglich das zusätzliche Gewicht der geförderten Stückgüter durch den an der Gleitschiene mittels des Gelenks angelenkten Ausleger abzufangen ist, so daß auch dieser relativ leicht bauen kann. Alternativ kann auch ein das äußere bodengestützte Förderorgan umgreifender oder untergreifender Bügel oder dergleichen vorgesehen sein, mit dem ebenfalls ein Verkippen des auskragenden Teils der Zwischenfördereinrichtung ausgeschlossen werden kann. Zugleich bietet die leichte Bauweise der Zwischenfördereinrichtung den Vorteil, daß diese auch aus dem Aspekt des Eigengewichts leicht zu handhaben ist.

Das Personal braucht somit die Stückgüter bzw. Gepäckstücke beispielsweise im häufig recht engen, sogenannten "narrow boddy" Laderaum eines Flugzeugs nicht mehr in kniender oder gebückter Haltung mit einer Drehbewegung aus den Lenden heraus über die Schulter heben, was zu einer dauerhaften Schädigung des Rückgrates führen würde. Die erfindungsgemäße Fördereinheit führt damit in vorteilhafter Weise zu einer Entlastung des Rückens dieser Person und somit zu einer Vermeidung einer Gefährdung deren Gesundheit. Hierbei ist mit dem erfindungsgemäßen System bzw. der Fördereinheit jeder Punkt bzw. Platz im Laderaum gezielt erreichbar, so daß der gesamte Stauraum bzw. die volle Nutzlastkapazität des Laderaums eines Flugzeugs ausgenutzt werden können.

So sind beispielsweise Einrichtungen oder Elemente zur Unterstützung der Hub-, Senk- oder Schwenk-Bewegung des zweiten und/oder des dritten Förderorgans vorgesehen. Dies können beispielsweise ein beiderseits der Ränder eines Förderorgans angeordneter kraftbetätigter Parallelogramm-Lenker, ein Federspeicherzylinder, elektrisch betriebene Stellglieder oder dergleichen Bauteile sein. Damit läßt sich die erforderliche Positionsveränderung für wechselnde Ablageplätze von Stückgut durch die im Laderaum tätige Person je nach Ausführungsform näherungsweise kraftfrei bis automatisch kraftbetätigt vorgeben.

Beispielsweise kann ein Multifunktions-Bedienelement vorgesehen sein, mit dem beispielsweise die horizontale Ausrichtung des dritten Förderorgans, die Neigung des zweiten Förderorgans, die Positionierung des ersten Förderorgans im Laderaum, die Förderrichtung, die Fördergeschwindigkeit oder weitere Funktionen steuerbar sind. Die im Laderaum tätige Person kann durch Betätigung des Multifunktions-Bedienelements die Fördereinheit dazu veranlassen, ein bestimmtes Stückgut bzw. Gepäckstück beim Beladen gezielt an einem bestimmten Platz abzulegen oder beim Entladen von einem ausgewählten Platz aufzunehmen.

Eine besonders bevorzugte Ausführungsform der erfindungsgemäßen Fördereinheit weist ein drittes Förderorgan auf, das über Fördermittel verfügt, die als Förderband bzw. Fördergurt ausgebildet sind. Das Förderband verläuft dabei über eine darunter angeordnete steife Gleitplatte. Damit ist sichergestellt, daß das als Förderband ausgebildete Fördermittel eine ausreichend hohe flächige Steifigkeit aufweist, so daß ein Durchhängen des Förderbandes selbst bei kleinen und zugleich schweren Gepäckstücken ausgeschlossen ist. Ferner ist dabei vorgesehen, daß eine dem Stückgut zugewandte Umlenkrolle des Förderbandes einen derart kleinen Durchmesser aufweist, daß die damit ausgebildete Spitze des dritten Förderorgans bzw. dieses selbst im Längsschnitt betrachtet spatel- oder zungenartig ausgebildet ist. Auf diese Weise kann das dritte Förderorgan gegebenenfalls zwischen zwei aufeinander liegende Gepäckstücke zumindest teilweise hinein geschoben werden, so daß dann das auf dem Förderband aufliegende obere Gepäckstück vom Förderband aufgezogen und mitgenommen werden kann. In gleicher Weise kann beim Beladen ein Gepäckstück bzw. Stückgut selbst noch knapp unter der Oberkante bzw. Decke des Laderaums auf die oberste Schicht eines Stückgutstapels aufgelegt werden, da das dritte Förderorgan für sich selbst kaum Platz in der Höhe in Anspruch nimmt. Damit ist der im Laderaum verfügbare Stauraum auch in der Höhe soweit als möglich ausnutzbar. Die im Längsschnitt betrachtete spatel- bzw. zungenartige Ausgestaltung des dritten Förderorgans ermöglicht auch eine besonders nahe Absenkung desselben an den Boden des Laderaums, so daß auch beispielsweise flache Gepäckstücke, die direkt auf dem Laderaumboden aufliegen vom dritten Förderorgan selbsttätig aufgenommen werden können, in dem die Spitze des dritten Förderorgans unter das auf dem Laderaumboden liegende Stückgut geschoben wird und bei rückläufigem Förderband das Stückgut auf das Förderband aufgezogen wird. Je nach Ausführungsform der Fördereinheit kann sich dabei das dritte Förderorgan selbsttätig entsprechend der Vorgaben des Bedienpersonals am Multifunktions-Bedienelement oder sogar automatisch in Abhängigkeit der Befehle von den Regelsystemen in den Stückgutstapel hinein bewegen, um von dort beim Entladen Gepäckstücke aufzunehmen oder beim Beladen zum Stückgutstapel zu einer bestimmten Position hinbewegen, um dort Stückgut gezielt abzulegen. Erforderlichenfalls kann die im Laderaum tätige Person bei auftretenden Problemen eingreifen und gegebenenfalls von Hand nachhelfen.

In einer besonders bevorzugten Ausführungsform des Förderbandes beträgt der Reibungskoeffizient µ zwischen wenigstens einem Teil des Stückguts und wenigstens einem Teil der dem Stückgut zugewandten Oberfläche des Förderbands über 0,50. In einer besonders bevorzugten Variante beträgt der Reibungskoeffizient µ über 0,60 und ganz besonders bevorzugt über 0,70. Damit ist sichergestellt, daß selbst Gepäckstücke mit besonders glatter Oberflächenbeschaffenheit, wie beispielsweise Hartschalenkoffer, Metallkoffer, Alukisten, glatte Segeltuchtaschen oder dergleichen genau so gut wie Gepäckstücke mit wesentlich griffigerer Oberfläche, wie beispielsweise herkömmliche Lederkoffer, Ledertaschen, Weichschalenkoffer, Stoffsäcke oder sonstige Gepäckstücke aus Leinen, Leder oder weichen Kunststoffen oder dergleichen problemlos vom Förderband des dritten Förderorgans aufgenommen werden können, selbst wenn diese hierfür vom dritten Förderorgan erst aus einem ungeordneten Stapel von übereinander liegenden Gepäckstücken heran-, heraus- oder heruntergezogen werden müßten. Damit ist ferner sichergestellt, daß beim Beladen derlei Stückgüter problemlos vom dritten Förderorgan auf bereits vorhandene Stückgüter aufgelegt werden können, selbst wenn dabei das aufzulegende Stückgut vom dritten Förderorgan über das bereits abgelegte Stückgut unter entsprechender Überwindung der zwischen diesen beiden Stückgütern herrschenden Reibungskräfte an- bzw. darüber hinweg verschoben werden müßte. Mit Reibungsbeiwerten von 0,40 bis 0,80 und bevorzugt zwischen 0,50 bis 0,75 zwischen dem Stückgut und dem Förderband ist bei den vorgenannten Materialien für Stückgut bzw. Gepäckstücke und einer entsprechenden Beschaffenheit der dem Stückgut zugewandten Oberfläche des Förderbandes regelmäßig ein problemloses Fördern bzw. Verschieben desselben sichergestellt.

In einer bevorzugten Variante ist weiterhin vorgesehen, daß das Förderband an dessen dem Stückgut zugewandter Oberfläche die Reibung erhöhende Mittel, wie insbesondere Aufrauhungen, Noppen, Rippen, Stege, Grannen, aufgesetzte Schaum- oder Moosgummteile oder dergleichen aufweist. Derlei reibungserhöhende Mittel können auch dadurch bereit gestellt werden, daß das Förderband mehrschichtig aufgebaut wird. Die Beschaffenheit einer mittleren Schicht kann dabei so gewählt werden, daß mit dem Förderband die im Förderband auftretenden Längs- und ggf. Querkräfte problemlos bewältigt werden können. Eine nach innen zu den Umlenk- oder Antriebsrollen hin weisende Schicht wird so gewählt, daß ein optimales Antreiben des Förderbandes gewährleistet ist. Eine nach außen zu den Gepäckstücken hin weisende Schicht kann abschnittsweise oder vollständig mit entsprechenden reibungserhöhenden Beschichtungen oder dergleichen ausgestattet sein.

Mit derlei reibungserhöhenden Mitteln soll sichergestellt werden, daß Stückgut in jeder Lage aus einem Stapel möglicherweise wirr übereinander gestapelter Stückgüter herausgezogen oder ein zu oberst aufliegendes Stückgut von einem solchen Stapel heruntergezogen und mit dem Förderband des dritten Förderorgans von diesem aufgenommen und an das zweite Förderorgan weiter gegeben werden kann. Bevorzugte Materialien für die Beschichtung zumindest von Teilen der nach außen gewandten Oberfläche des Förderbandes sind beispielsweise verschiedene Gummiarten, Moosgummiauflagen, weiche bzw. haftende Kunststoffbeschichtungen oder Kunststoffauflagen, oder dergleichen. Alternativ ist es denkbar, die Rauhigkeit der nach außen weisenden Oberfläche des Förderbandes zu erhöhen.

Die Erfindung wird nachfolgend in Ausführungsbeispielen anhand der Figuren der Zeichnung näher erläutert. Es zeigt:
- Fig. 1: einen schematisch vereinfachten Schnitt als auch eine schematisch vereinfachte Draufsicht eines Laderaums in einem Flugzeug mit einer darin angeordneten beispielhaften Ausführungsform einer erfindungsgemäßen Zwischenfördereinrichtung beim Beladen, die am Rollfeld-Förderorgan angelenkt ist;
- Fig. 2: einen schematisch vereinfachten Schnitt als auch eine schematisch vereinfachte Draufsicht der in Fig. 1 gezeigten Zwischenfördereinrichtung, die am Rollfeld-Förderorgan angelenkt ist, mit einer zweiten Variante des zweiten Förderorgans beim Beladen mit teilweise ausgefahrenem zweiten Förderorgan;
- Fig. 3: einen schematisch vereinfachten Schnitt als auch eine schematisch vereinfachte Draufsicht der in Fig. 2 gezeigten zweiten Variante einer Zwischenfördereinrichtung beim Beladen mit darunter angeordneter Auffangschale (kurz: DWU);
- Fig. 4: einen schematisch vereinfachten Schnitt als auch eine schematisch vereinfachte Draufsicht der in Fig. 2 gezeigten zweiten Variante einer in Fig. 1 gezeigten Zwischenfördereinrichtung beim Entladen ohne darunter angeordneter Auffangschale (kurz: DWU);
- Fig. 5: eine schematische vereinfachte seitliche Ansicht einer alternativen Ausführungsform des erfindungsgemäßen Systems als auch einer alternativen Ausführungsform der erfindungsgemäßen Zwischenfördereinrichtung, beim Beladen;
- Fig. 6: die in Fig. 5 gezeigte alternative Ausführungsform des Systems als auch der Zwischenfördereinrichtung, beim Entladen;
- Fig. 7: eine schematisch vereinfachte vergrößerte Seitenansicht der in Fig. 5 und 6 gezeigten Variante;
- Fig. 8: eine schematisch vereinfachte Draufsicht auf die in Fig. 17 bis Fig. 7 gezeigte Variante; und
- Fig. 9: eine schematisch vereinfachte vergrößerte Teildraufsicht auf die in Fig. 5 bis 8 gezeigte Variante.

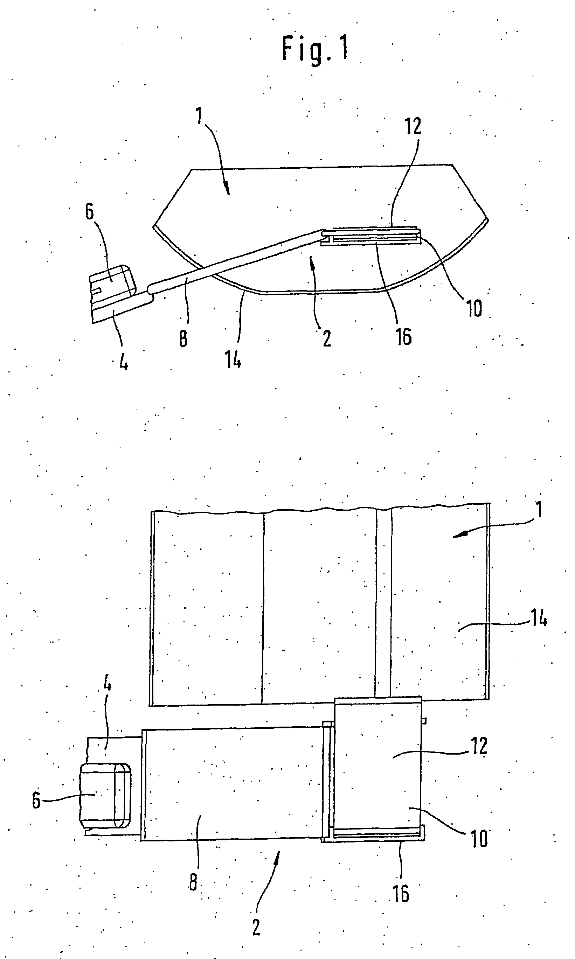

In Fig. 1 ist in einem schematisch vereinfachten Schnitt als auch in einer schematisch vereinfachten Draufsicht ein Laderaum 1 eines nicht näher dargestellten Flugzeuges mit einer darin angeordneten ersten beispielhaften Ausfiihrungsform einer erfindungsgemäßen Zwischenfördereinrichtung 2 beim Beladen gezeigt. Die Zwischenfördereinrichtung 2 ist an einem Rollfeld-Förderorgan 4, das nur zum Teil angeschnitten dargestellt ist und ein angeschnittenes Stückgut 6 fördert, angelenkt. Das Rollfeld-Förderorgan, kann wie vorstehend diskutiert, auf dem Rollfeld verfahren werden.

Die Zwischenfördereinrichtung 2 weist in Fig. 1 ein erstes Förderorgan 8 auf, das vom Rollfeld-Förderorgan 4 durch die Laderaumöffnung hindurch bis in den Laderaum 1 hinein reicht, wobei das erste Förderorgan 8 hier beispielsweise als Förderband ausgebildet ist, sowie ein zweites Förderorgan 10. Das zweite Förderorgan 10 verfügt über einen beispielsweise als Förderband ausgebildeten, in dessen Längsrichtung und damit in Längsrichtung des Flugzeuges längenveränderbaren Förderabschnitt 12, der bei dieser Darstellung bis zum, der hier nicht näher dargestellten Laderaumöffnung zugewandten, vorderen Ende einer den nicht näher dargestellten Boden des Laderaumes 1 auskleidenden Transporteinrichtung 14 reicht, wobei die Transporteinrichtung 14 beispielsweise als Transportteppich ausgebildet sein kann.

Das zweite Förderorgan 10 ist am ersten Förderorgan 8 angelenkt und kann gegenüber diesem verschwenkt werden. Das zweite Förderorgan 10 verfügt über eine gestell- oder rahmenartige Struktur 16, vermittels der der längenveränderliche Förderabschnitt 12 abgestützt ist. Das Stückgut 6 wird vom Rollfeld-Förderorgan 4 zum ersten Förderorgan 8 der Zwischenfördereinrichtung 2 transportiert und von dort zum zweiten Förderorgan 10 weitertransportiert, so daß es quer zur Flugzeuglängsachse weiter in den Laderaum 1 hineingelangt und dann in Längsrichtung des Laderaumes 1 vom zweiten Förderorgan 10 zur Transporteinrichtung 14 übergeben werden kann, so daß es von dort aus weiter in die Tiefe des Laderaumes 1 transportierbar ist.

Im weiteren Verlauf der Figurenbeschreibung werden gleich- oder ähnlich wirkende Teile bzw. Elemente mit den selben Bezugszeichen wie in der ersten Ausführungsform versehen.

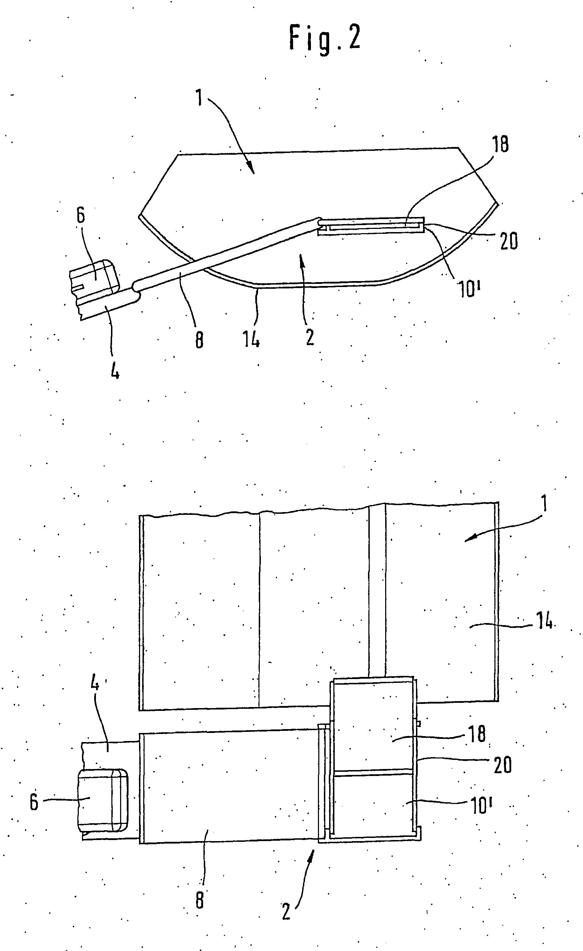

In Fig. 2 ist in einem schematisch vereinfachten Schnitt als auch in einer schematisch vereinfachten Draufsicht die in Fig. 1 gezeigte Zwischenfördereinrichtung 2 mit einer Variante des zweiten Förderorgans 10' beim Beladen mit teilweise ausgefahrenem zweiten Förderorgan 10' dargestellt. Das zweite Förderorgan 10' weist eine in Längsrichtung des Förderorgans 10' verschiebliche Platte 18 auf, die in einer schienenartigen Führungsstruktur 20 geführt ist und bei der hier gezeigten Darstellung soweit in Flugzeuglängsrichtung ausgefahren ist, daß sie bis über das vordere Ende der bodenseitigen Transporteinrichtung 14 reicht. Damit ist sichergestellt, daß Stückgut 6 von der Zwischenfördereinrichtung 2 lückenlos an die Transporteinrichtung 14 übergeben werden kann.

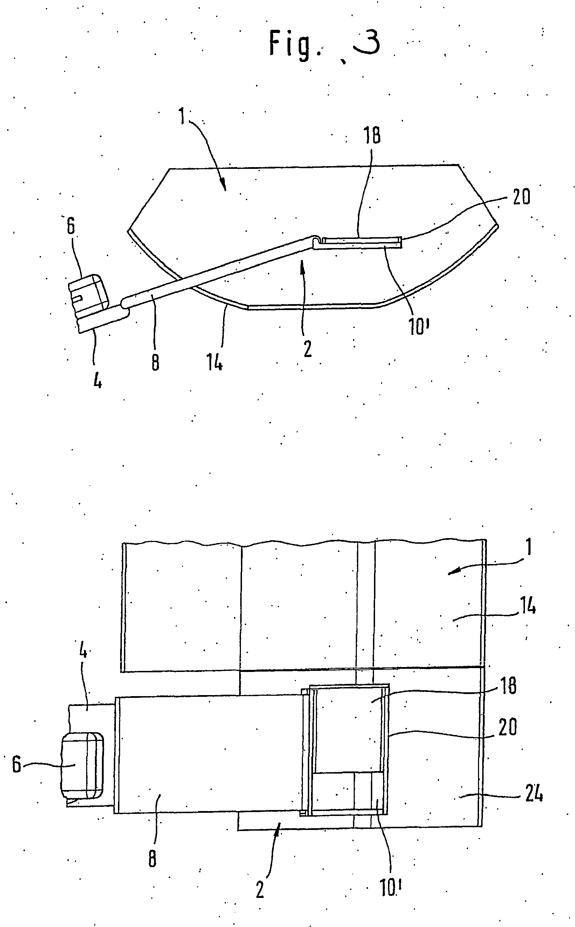

In Fig. 3 ist in einem schematisch vereinfachten Schnitt als auch in einer schematisch vereinfachten Draufsicht die bereits in Fig. 2 gezeigte zweite Variante einer Zwischenfördereinrichtung 2 mit der dort bereits dargestellten Variante des zweiten Förderorgans 10' beim Beladen mit darunter angeordneter Auffangschale 24 dargestellt.

Wie bereits vorstehend erwähnt, sind nachfolgend ähnlich wirkende Teile bzw. Elemente der weiter diskutierten Varianten mit gleichen Bezugszeichen wie in den vorausgegangenen Figuren versehen.

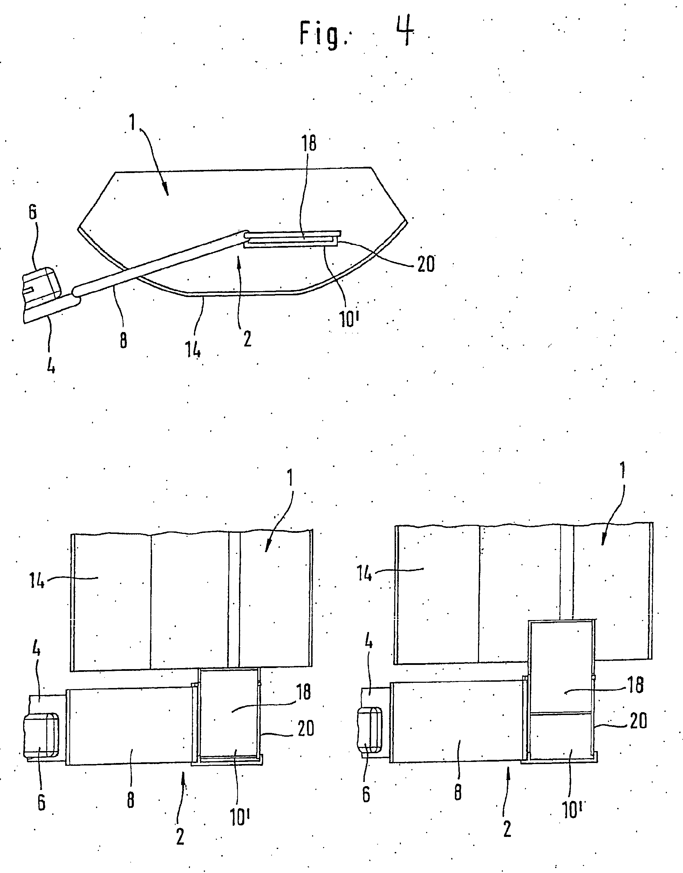

Die in Fig. 4 veranschaulichten Entladevorgänge sind ohne Auffangschale (kurz: DWU) dargestellt.

In Fig. 4 ist in einem schematisch vereinfachten Schnitt als auch einer schematisch vereinfachten Draufsicht die in Fig. 2 beim Beladen gezeigte Variante einer in Fig. 1 gezeigten Zwischenfördereinrichtung 2 mit dem zweiten Förderorgan 10' gezeigt, hier jedoch beim Entladen ohne darunter angeordneter DWU. Das zweite Förderorgan 10' weist hierbei ein Förderband auf, das über einer darunter angeordneten steifen Gleitplatte 18 verläuft, wobei die Platte 18 mit dem Förderband zwischen zwei Stückgüter 6 einschiebbar ist und wobei das obere Stückgut mit dem Förderband wegförderbar ist. Zum Entladen sticht die Platte 18 einem Spatel gleich in Längsrichtung in übereinander liegende Stückgüter am vorderen Ende der Transporteinrichtung 14 hinein, zieht mit dem Förderband ein Stückgut auf sich hinauf und nimmt es bei der Rückwärtsbewegung des Förderbands mit sich mit, um es dann an das erste Förderorgan 8 zu übergeben, so daß es von dort zum Rollfeld-Förderorgan 4 zum weiteren Entladen transportiert werden kann.

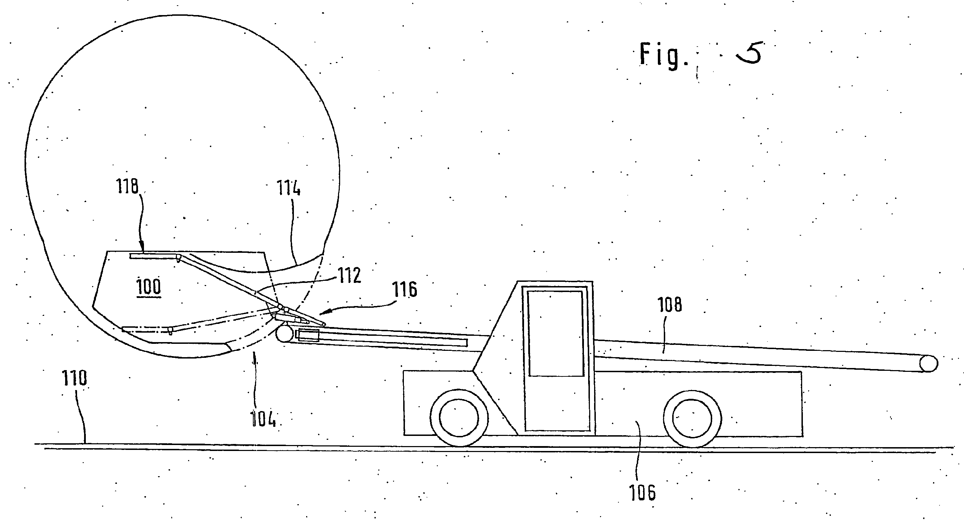

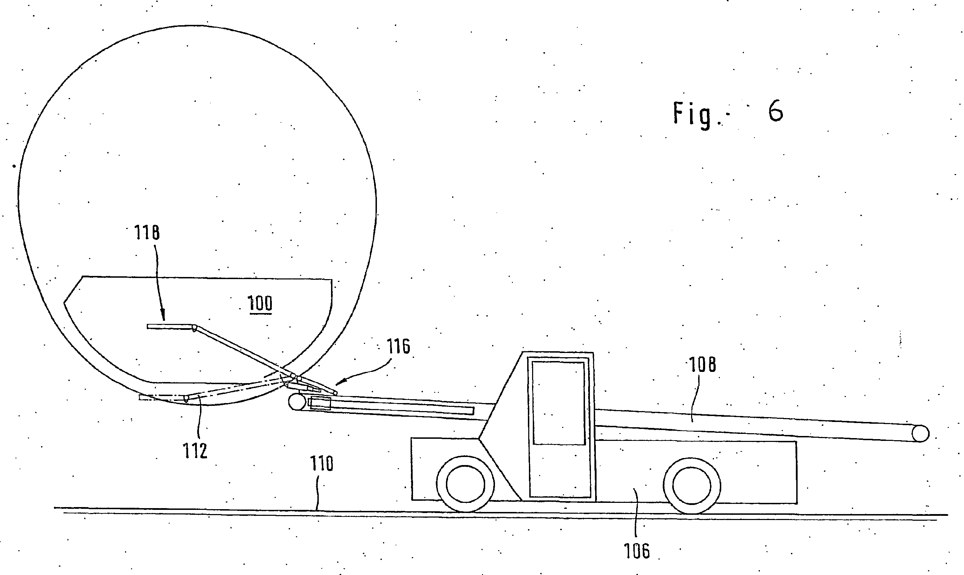

In Fig. 5 bis 9 ist eine weitere Variante des erfindungsgemäßen Systems als auch der erfindungsgemäßen Zwischenfördereinrichtung in schematisch vereinfachter Weise dargestellt. Gleiche oder gleichwirkende Teile werden zur Vereinfachung der Diskussion mit den selben Bezugszeichen versehen.

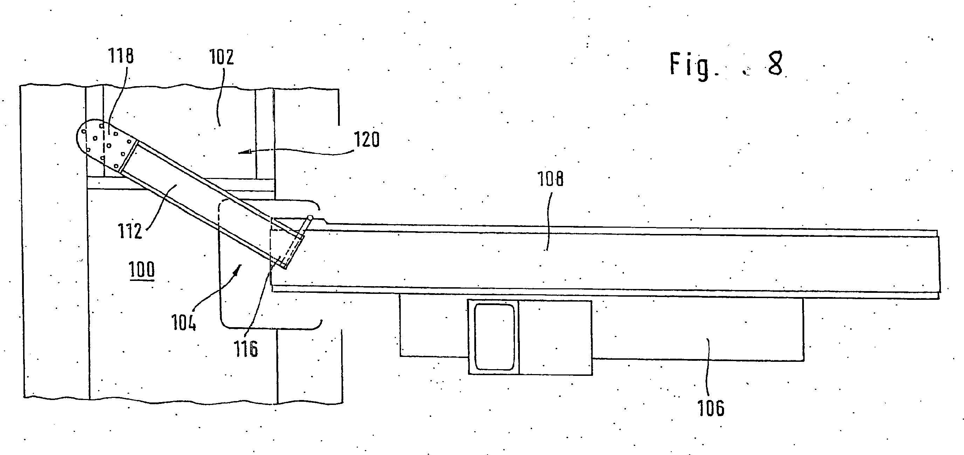

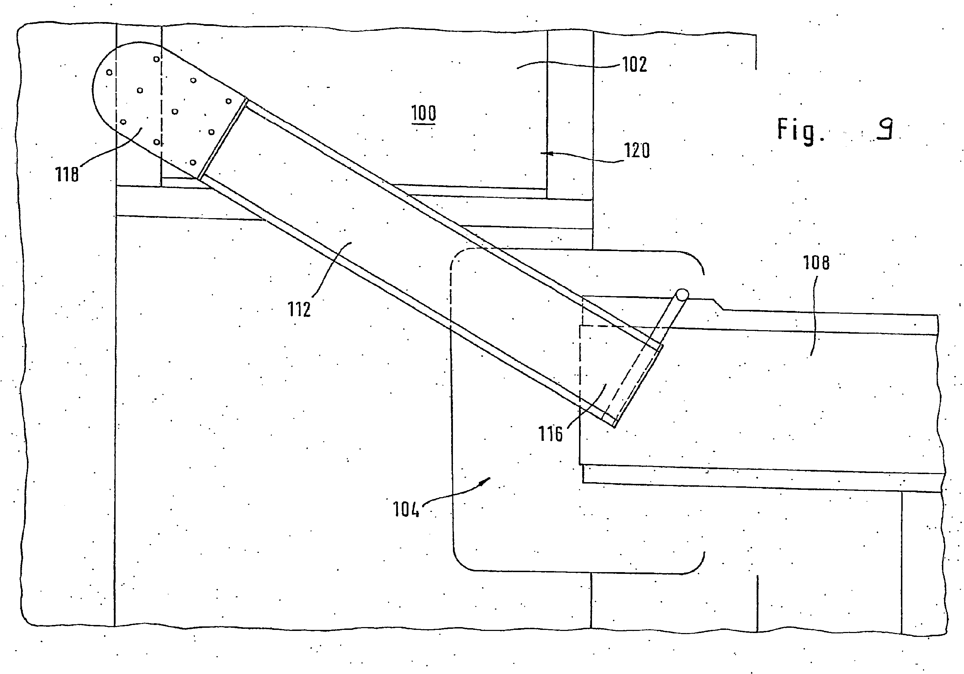

In Fig. 5 ist in einer schematisch vereinfachten seitlichen Ansicht eine weitere Variante des erfindungsgemäßen Systems zum Be- und Entladen von Stückgut in einem Laderaum 100 eines Flugzeugs beim Beladen gezeigt. Wie in Fig. 8 oder 9 besonders gut erkennbar, ist der Boden des Laderaums 100 flächig mit einer Transporteinrichtung 102 abgedeckt, die bevorzugt als Transportteppich ausgebildet sein kann. Dieser Transportteppich 102 dient zur, insbesondere taktweisen, Förderung von Stückgut in Richtung auf das innere Ende des Laderaums 100 beim Beladen bzw. von diesem weg beim Entladen. Dabei reicht die Transporteinrichtung 102 mit deren vorderen Ende bis in den Bereich der Laderaumöffnung 104 im Flugzeugrumpf. Seitlich vom Flugzeug steht beispielsweise eine mobile Umschlagmaschine 106, die ein Förderorgan 108 aufweist, zum Transport von Stückgut zwischen der Rollfeldebene 110 und der Laderaumöffnung 104. Zwischen dem flugzeugseitigen Ende des äußeren Förderorgans 108 und dem vorderen Ende der Transporteinrichtung 102 im Laderaum 100 bildet eine Zwischenfördereinrichtung 112 eine Art Brücke, mittels der der Abstand zwischen dem flugzeugseitigen Ende des äußeren Förderorgans 108 und dem vorderen Ende der Transporteinrichtung 102 überbrückt werden kann. Mit der Zwischenfördereinrichtung 112 wird Stückgut beim Beladen zunächst im wesentlichen quer zur Flügzeuglängsachse tiefer in den Flugzeugrumpf hinein gefördert. Daraufhin ist das Stückgut dann im Laderaum 100 manuell drehbar und weiter im wesentlichen in Flugzeuglängsrichtung beförderbar, so daß es auf dem vorderen Ende der Transporteinrichtung 102 im Laderaum 100 abgelegt werden kann. Beim Entladen kann mit der Zwischenfördereinrichtung 112 über das vordere Ende der Transporteinrichtung 102 hinaus in die Ebene der Laderaumöffnung 104 gefördertes Stückgut im wesentlichen quer zur Flugzeuglängsachse durch die Laderaumöffnung 104 hindurch weggefördert werden.

Bei dem hierbei schematisch vereinfacht gezeigten Flugzeug wird die Laderaumlucke 114 durch ein Verschwenken nach oben innen geöffnet.

Wie in Figuren 5 bis 6 gut erkennbar, reicht das flugzeugseitige Ende des äußeren Förderorgans 108 bis an den Bereich der Laderaumöffnung 104 heran, jedoch nicht hinein, so daß beim Positionieren der mobilen Umschlagmaschine 106 keine Gefahr der Beschädigung der Laderaumöffnung 104 besteht.

Mit dem erfindungsgemäßen System als auch der erfindungsgemäßen Zwischenfördereinrichtung 112 ist Stückgut auf der Transporteinrichtung 102 im Laderaum 100 beim Beladen gezielt ablegbar und beim Entladen von dort gezielt weg förderbar.

Die Zwischenfördereinrichtung 112 kann sowohl in Förderrichtung des äußeren bodengestützten Förderorgans 108 hin und her verschoben als auch relativ zu diesem um einen Winkel von etwa -30° bis + 30° verschwenkt werden, so daß das dem äußeren Förderorgan 108 zugewandte 116 der Zwischenfördereinrichtung 112 immer mit dem äußeren Förderorgan 108 überlappt und das im Inneren des Laderaums 100 befindliche innere Ende 118 der Zwischenfördereinrichtung 112 immer mit dem der Laderaumöffnung 104 zugewandten Endbereich 120 der Transporteinrichtung 102 überlappt, wie dies in Fig. 8 und 9 veranschaulicht ist.

Die Zwischenfördereinrichtung 112 weist an deren Unterseite im Überlappungsbereich 122 mit dem äußeren Förderorgan 108 ein nicht näher dargestelltes Gleitelement auf, das beispielsweise als Rad oder Rolle ausgebildet sein kann. Dieses Gleitelement dient zur verschieblichen Abstützung der Zwischenfördereinrichtung 112 auf der Oberseite 124 des äußeren Förderorgans 108 in dessen Endbereich.

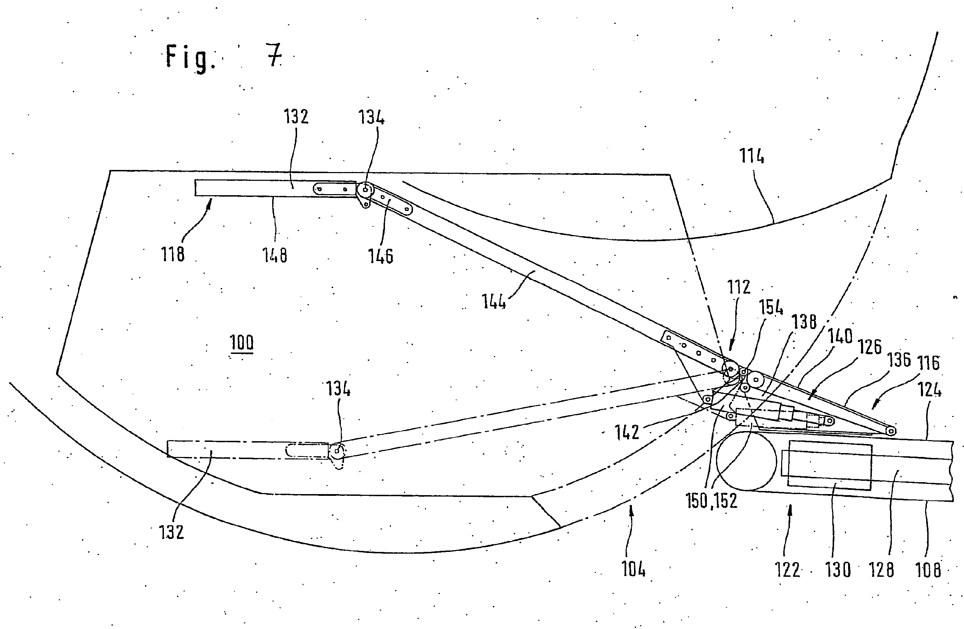

Die Zwischenfördereinrichtung 112 weist im Überlappungsbereich 122 mit dem äußeren Förderorgan 108 einen Ausleger 126 auf, der zwischen Fördereinrichtung 112 angelenkt ist. Der Ausleger 126 ist mit dessen von der Zwischenfördereinrichtung 108 wegweisenden Ende mit einem dort angelenkten Ende nicht mehr dargestellten Gelenk gegen eine Gleitschiene 128 abgestützt. Die Gleitschiene 128 ist parallel zur Längsrichtung des äußeren Förderorgans 108 orientiert und an diesem befestigt. Die Gleitschiene 128 dient zur verschieblichen Abstützung der Zwischenfördereinrichtung 112 in Förderrichtung des äußeren Förderorgans 108. Hierfür ist in der Fig. 7 dargestellten Variante ein verschieblicher Schlitten 130 vorgesehen, der mit hier nicht näher dargestellten Elementen mit dem Gelenk des Auslegers 126 verbunden ist.

Wie insbesondere in Fig. 5 bis 7 veranschaulicht, ist das dem vorderen Ende 120 der Transporteinrichtung 102 im Laderaum 100 zugewandte Ende 108 der Zwischenfördereinrichtung 112 in der Höhe veränderbar und zwar relativ zu dem äußeren Förderorgan 108 zugewandten Anfang 116 der Zwischenfördereinrichtung 112. Dabei wird insbesondere in Fig. 7 deutlich, daß ein Endabschnitt 132 der Zwischenfördereinrichtung 112 derart um eine Achse 134 quer zur Verrichtung der Zwischenfördereinrichtung 112 verschwenkbar ist, daß dieser Endabschnitt 132 horizontal ausrichtbar ist. Ein Anfangsabschnitt 136 der Zwischenfördereinrichtung 112 ist mit einem vorbestimmten Neigungswinkel, der beispielsweise zwischen 10° bis 30° betragen kann, zum Neigungswinkel des äußeren Förderorgans 108 orientiert.

Dabei ist die Zwischenfördereinrichtung 112 mit deren Förderrichtung für die Förderung von Stückgut im wesentlichen quer zur Flugzeuglängsachse, in dem Winkelbereich von etwa -30° bis +30° relativ zur Förderrichtung des äußeren Förderorgans 108 verschwenkbar.

Die tragende Struktur der Zwischenfördereinrichtung 112 ist aus leichten Werkstoffen, wie beispielsweise Aluminium oder Faserverbundwerkstoffen hergestellt.

Wie des weiteren insbesondere aus Fig. 7 erkennbar ist, weist die Zwischenfördereinrichtung 112 einen ersten sich gegen das äußere Förderorgan 108 abstützenden Rahmen 138 auf. Der Rahmen 138 trägt ein erstes Förderorgan 140, das beispielsweise als Förderband ausgebildet sein kann. Dieses erste Förderorgan 140 nimmt beim Beladen Stückgut beispielsweise im Bereich der Laderaumöffnung 104 des Flugzeugs vom Flugzeug zugewandten Ende 122 des äußeren Förderorgans entgegen und befördert selbiges im wesentlichen quer zur Flugzeuglängsachse weiter, wobei unter im wesentlichen quer zur Flugzeuglängsachse die vorstehend diskutierte Streubreite der Richtungstoleranz von -30° bis +30° verstanden wird. An das Ende 142 des ersten Förderorgans 140 ist ein zweites Förderorgan 144 angeschlossen, das beispielsweise ein Förderband sein kann. Dieses zweite Förderorgan 144 dient zur Überbrückung der Distanz vom Ende 122 des äußeren Förderorgans 108 ins Innere des Laderaums 100. Das zweite Förderorgan 144 nimmt beim Beladen Stückgut beispielsweise im Bereich der Laderaumöffnung 104 des Flugzeugs vom Ende 142 des ersten Förderorgans 140 entgegen und fördert dieses im wesentlichen quer zur Flugzeuglängsachse tiefer in den Flugzeugrumpf hinein. An das Ende 146 des zweiten Förderorgans 144 schließt sich ein drittes Förderorgan 148 an, welches vorzugsweise als Rollenplatte ausgebildet ist. Beim Beladen nimmt das dritte, als Rollenplatte ausgebildete Förderorgan 148 Stückgut vom Ende 146 des zweiten Förderorgans 144 entgegen und erlaubt eine manuelle Drehung des auf dem dritten Förderorgan 148 drehbar liegenden Stückgut derart, daß das Stückgut im wesentlichen in Flugzeuglängsrichtung zum vorderen Ende 120 einer im Laderaum 100 vorhanden Transporteinrichtung 102 hin weiter beförderbar ist.

Beim Entladen wird dementsprechend vom vorderen Ende 120 der im Laderaum 100 vorhandenen Transporteinrichtung 102 Stückgut zum dritten Förderorgan 148 in der Weise entgegengenommen, daß es von einer in diesem Bereich tätigen Person ohne wesentlichen Kraftaufwand auf das dritte Förderorgan 148 aufbringbar ist, wo es drehbar gelagert ist, so daß es gegebenenfalls manuell gedreht werden kann und an das zweite Förderorgan 144 übergebbar abgestützt ist. Dabei fördert das zweite Förderorgan 144 Stückgut im wesentlichen quer zur Flugzeuglängsachse zur Laderaumöffnung 104 und/oder durch diese hindurch und übergibt das Stückgut an das erste Förderorgan 140, welches das Stückgut im wesentlichen quer zur Flugzeuglängsachse zum äußeren Förderorgan 108 weiterfördert und an dieses zur Weiterförderung übergibt. Am Rahmen 138 des ersten Förderorgans 140 ist ein nicht näher dargestelltes Gleitelement, das beispielsweise als Rad oder Rolle ausgebildet sein kann, angelenkt. Ferner ist am Rahmen 138 des ersten Förderorgans 140 ein Ausleger angelenkt, der beispielsweise als zweiarmiger Ausleger ausgebildet sein kann. Dabei können die beiden Arme 150 und 152 längenveränderlich als Teleskoparme ausgebildet sein, so daß um den beiden Armen mit dem näher dargestellten Gelenk ausgebildetes Dreieck in dessen Geometrie veränderlich ist. Auf diese Weise kann die Zwischenfördereinrichtung 112 einerseits besonders stabil und erschütterungsfrei am äußeren Förderorgan 108 angelenkt werden und andererseits zugleich relativ zu diesem verschwenkbar gehalten sein.

Das zweite Förderorgan ist derart am Rahmen 138 des ersten Förderorgans 140 angelenkt, daß es um eine Achse 154 quer zur Förderrichtung verschwenkbar ist, beispielsweise um einen Winkelbereich von -15° bis +45° relativ zur Horizontalen, zur Veränderung der Höhe des Endes 146 des zweiten Förderorgans 144 relativ zu dessen Anfang. Je nach Bedarf und Ausrichtung des äußersten Förderorgans 108 kann auch eine Verschwenkbarkeit des zweiten Förderorgans 144 um einen Winkelbereich von etwa -30° bis +30° sinnvoll sein. Das dritte Förderorgan 148 ist um eine Achse 134 relativ zum zweiten Förderorgan 144 verschwenkbar, so daß im Betrieb der Zwischenfördereinrichtung 112 horizontal ausrichtbar ist. Dabei sind dem zweiten und/oder dritten Förderorgan dessen Hub-, Senk- oder Schwenk-Bewegung unterstützende Elemente zugeordnet, wie beispielsweise ein beidseits der Ränder des zweiten Förderorgans 144 angeordneter Parallelogramm-Lenker zur Unterstützung einer Hub-, Senk- oder Schwenk-Bewegung, so daß derlei Bewegungen von einer im Laderaum 100 tätigen Person Näherungskraft frei vorgegeben werden können.

Die Zwischenfördereinrichtung 112 verfügt darüber hinaus über ein Multifunktions-Bedienelement, was nicht näher dargestellt ist. Das Multifunktions-Bedienelement ist im Bereich des dritten Förderorgans 148 angeordnet, und kann als Multifunktions-Hebel ausgebildet sein. Vermittels des Multifunktions-Bedienelements kann beispielsweise die horizontale Ausrichtung des dritten Förderorgans 148, die Neigung des zweiten Förderorgans 144, die Positionierung des ersten Förderorgans 140 auf dem äußeren Förderorgan 108, die Förderrichtung, die Fördergeschwindigkeit oder weitere Funktionen gesteuert werden.

Vermittels der nicht näher dargestellten Rolle zur Abstützung der Zwischenfördereinrichtung 112 auf dem äußeren Förderorgan 108 wird im Betrieb ein geringer Spalt zwischen den Förderbändern des ersten Förderorgans 140 der Zwischenfördereinrichtung 112 und dem äußeren Förderorgan 108 von etwa 5 - 10 mm eingehalten, so daß diese beiden dicht benachbarten Förderbänder zwar möglichst nahe beieinander zu liegen kommen, jedoch nicht gegeneinander aufeinander reiben. Damit ist ein optimaler Übergang von Stückgut vom Förderband des äußersten Förderorgans 108 auf das Förderband des ersten Förderorgans 140 der Zwischenfördereinrichtung 112 gewährleistet.

Das nicht näher dargestellte Gelenk mit dem der Ausleger 138 an der Gleitschiene 128 über den Gleitschlitten 130 angelenkt ist, gewährleistet sowohl eine ausreichend starke Abstützung der gesamten Zwischenfördereinrichtung 112 nebst darauf im Betrieb befindlichen Stückguts gegen das im Überlappungsbereich 122 unterhalb des Rahmens 138 befindliche äußere Förderorgan 108. Dabei kann das Gelenk translatorische als auch rotatorische Bewegungen zulassen.

Die Antriebseinrichtung für die Förderorgane der Zwischenfördereinrichtung können beispielsweise elektrische Stellmotoren sein. Es sind aber ebenso hydraulische oder pneumatische Antriebe denkbar. Ebenso ist denkbar, daß die Unterstützungselemente, die die Hub-, Senk- oder Schwenk-Bewegungen der drei Förderorgane der Zwischenfördereinrichtung 112 unterstützen als aktive Elemente, wie beispielsweise Hydraulikzylinder, Pneumatikzylinder oder elektrische Stellmotoren ausgebildet sind.

Die Länge der Zwischenfördereinrichtung beträgt in einer bevorzugten Ausführungsform in etwa 1,50 m bei einer Breite von etwa 0,40 m. Das Gesamtgewicht der Zwischenfördereinrichtung liegt dabei unter 100 kg. Aufgrund der damit geringen Massenkräfte ist eine leichte Bewegbarkeit der Zwischenfördereinrichtung 112 in jedem Betriebszustand garantiert. Zugleich ist das Risiko einer Beschädigung der Flugzeugstruktur insbesondere im Laderaum 100 bei einer versehentlichen Berührung eines Endes der Zwischenfördereinrichtung 112 mit der Flugzeugstruktur aufgrund der geringen Massenkräfte vernachlässigbar gering. Zum weiteren Schutz gegen Beschädigungen und/oder Verletzungen sind die Ränder oder Ecken der Zwischenfördereinrichtung 112 mit entsprechend weichem Material verkleidet.

Die vorliegende Erfindung schlägt damit erstmals ein System zum Be- und Entladen von Stückgut, wie insbesondere Gepäckstücke oder dergleichen in einem Laderaum eines Flugzeugs, vor, mit einer Förderung des Stückgutes in Richtung auf das innere Ende des Laderaumes beim Beladen bzw. von diesem weg beim Entladen, und mit einem Transport des Stückgutes zwischen der Rollfeldebene und der Laderaumöffnung. Bei dem erfindungsgemäßen System ist das Stückgut beim Beladen in Querrichtung zur Flugzeuglängsachse und auch in Flugzeuglängsrichtung in den Flugzeugrumpf hinein förderbar und im Laderaum ablegbar. Beim Entladen in die Ebene der Laderaumöffnung zurück gefördertes Stückgut ist quer zur Flugzeuglängsachse durch die Laderaumöffnung hindurch weg förderbar. Insbesondere schlägt die vorliegende Erfindung ein System zum Be- und Entladen von Stückgut in einem Laderaum, insbesondere eines Flugzeugs, vor, mit einer beispielsweise in einer Variante den Boden des Laderaumes flächig abdeckenden Transporteinrichtung zur, insbesondere taktweisen, Förderung des Stückgutes in Richtung auf das innere Ende des Laderaumes beim Beladen bzw. von diesem weg beim Entladen, wobei die Transporteinrichtung mit deren vorderem Ende bis in den Bereich der Laderaumöffnung im Flugzeugrumpf reicht, und mit einem an der Außenseite des Flugzeuges an die Laderaumöffnung anschließenden Förderorgan zum Transport des Stückgutes zwischen der Rollfeldebene und der Laderaumöffnung. Bei dieser Variante des erfindungsgemäßen Systems ist erstmals zwischen dem flugzeugseitigen Ende des äußeren Förderorgans und dem vorderen Ende der Transporteinrichtung im Laderaum wenigstens eine Zwischenfördereinrichtung angeordnet, mit der das Stückgut beim Beladen zunächst in Querrichtung zur Flugzeuglängsachse tiefer in den Flugzeugrumpf hinein förderbar ist und sodann in Flugzeuglängsrichtung förderbar und auf dem vorderen Ende der Transporteinrichtung im Laderaum ablegbar ist, und mit der beim Entladen über das vordere Ende der Transporteinrichtung hinaus in die Ebene der Laderaumöffnung gefördertes Stückgut quer zur Flugzeuglängsachse durch die Laderaumöffnung hindurch weg förderbar ist.

## Patentansprüche

1. System zum Be- und Entladen von Stückgut (6) in einem Laderaum (1) eines Flugzeugs, mit
einem Flugzeug und
einer den Boden des Laderaumes (1) des Flugzeugs flächig abdeckenden Transporteinrichtung (14) zur, insbesondere taktweisen, Förderung des Stückgutes (6) in Richtung auf das innere Ende des Laderaumes (1) beim Beladen bzw. von diesem weg beim Entladen, wobei die Transporteinrichtung (14) mit deren vorderem Ende bis in den Bereich der Laderaumöffnung im Flugzeugrumpf reicht, und mit
einem bodengestützten an der Außenseite des Flugzeuges an die Laderaumöffnung anschließenden Förderorgan (4) zum Transport des Stückgutes zwischen der Rollfeldebene und der Laderaumöffnung, und
einer mit dem äußeren Förderorgan (4) verbindbaren Zwischenfördereinrichtung (2), die zwischen dem flugzeugseitigen Ende des äußeren Förderorgans (4) und dem vorderen Ende der den Boden des Laderaumes (1) flächig abdeckenden Transporteinrichtung (14) im Laderaum (1) angeordnet ist, mit der das Stückgut (6) beim Beladen zunächst in Querrichtung zur Flugzeuglängsachse tiefer in den Flugzeugrumpf hinein förderbar ist und sodann in Flugzeuglängsrichtung förderbar und auf dem vorderen Ende der Transporteinrichtung (14) im Laderaum (1) ablegbar ist, und mit der beim Entladen über das vordere Ende der Transporteinrichtung (14) hinaus in die Ebene der Laderaumöffnung gefördertes Stückgut (6) quer zur Flugzeuglängsachse durch die Laderaumöffnung hindurch weg förderbar ist, wobei
die Zwischenfördereinrichtung (2) wenigstens ein in Förderrichtung längenveränderbares erstes als Förderband ausgebildetes Förderorgan (8) aufweist, das in den Laderaum (1) einführbar ist, und das beim Beladen Stückgut (6) im Bereich der Laderaumöffnung vom flugzeugseitigen Ende des äußeren Förderorgans (4) entgegennimmt und quer zur Flugzeuglängsachse weiterfördert, wobei sich an dessen flugzeugrumpfinneren Ende ein weiteres zweites als Förderband ausgebildetes Förderorgan (10, 10') anschließt, welches das Stückgut (6) vom ersten Förderorgan (8) entgegennimmt und im Laderaum (1) in Flugzeuglängsrichtung weiter fördert,
**dadurch gekennzeichnet, daß**
das weitere zweite Förderorgan (10, 10') der Zwischenfördereinrichtung (2) derart um eine Achse quer zur Förderrichtung des ersten Förderorgans (8) der Zwischenfördereinrichtung (2) verschwenkbar ist, dass dieses zweite Förderorgan (10, 10') horizontal ausrichtbar ist, und
das Förderband des zweiten Förderorgans (10, 10') über einer darunter angeordneten steifen Gleitplatte (18) verläuft, wobei
die Gleitplatte (18) in einer schienenartigen Führungsstruktur 20 in Längsrichtung des zweiten Förderorgans (10, 10') verschieblich geführt ist, und
wobei beim Entladen die Gleitplatte (18) mit dem Förderband zwischen zwei Stückgütern (6) einschiebbar ist, und das obere Stückgut (6) mit dem Förderband wegförderbar ist.

2. System nach Anspruch 1, **dadurch gekennzeichnet, daß** das Stückgut (6) auf der Transporteinrichtung (14) im Laderaum (1) beim Beladen gezielt ablegbar und beim Entladen von dort gezielt wegförderbar ist.

3. System nach einem der Ansprüche 1 oder 2, **dadurch gekennzeichnet, daß** über dem Boden des Laderaums (1) horizontal zwischen der Zwischenfördereinrichtung (2) und dem Boden des Laderaums (1) im Bereich der Laderaumöffnung eine den Boden des Laderaums (1) als auch den bodenseitigen Bereich der Laderaumöffnung flächig abdeckende Schale (24) angeordnet ist.

4. System nach Anspruch 3, **dadurch gekennzeichnet, daß** die Schale (24) entlang einer Linie parallel zur Längsachse des Flugzeugs umklappbar ist.

5. System nach einem der Ansprüche 1 bis 4, **dadurch gekennzeichnet, daß** die Transporteinrichtung (14) im Laderaum (1) ein Transportteppich ist.

6. System nach Anspruch 1, **dadurch gekennzeichnet, daß** das zweite Förderorgan (10, 10') beim Entladen Stückgut (6) vom vorderen Ende der im Laderaum (1) vorhandenen Transporteinrichtung (14) aufnimmt und in Flugzeuglängsrichtung weg fördert und an das erste Förderorgan (8) übergibt, welches das Stückgut (6) quer zur Flugzeuglängsachse zur Laderaumöffnung fördert und an das äußere Förderorgan (4) zur Weiterförderung übergibt.

7. System nach Anspruch 1, **dadurch gekennzeichnet, daß** das flugzeugrumpfinnere Ende des ersten Förderorgans (8) der Zwischenfördereinrichtung (2) über eine Schulter an einer im Gepäckladeraum (1) senkrecht orientierten ersten Schiene längs derselben vertikal verschieblich angelenkt ist, zur Höhenverstellung im Gepäckladeraum, und daß die senkrecht orientierte erste Schiene ihrerseits von wenigstens einer an der Decke oder dem Boden befestigten waagerecht orientierten zweiten Schiene geführt ist, zur Verschiebung des Anlenkpunktes quer zur Flugzeuglängsachse.

## Claims

1. A system for loading and unloading loose cargo (6) in a cargo hold (1) of a plane, comprising
a plane and
transport means (14) covering the area of the floor of the cargo hold (1) of the plane for particularly intermittently conveying the loose cargo (6) towards the inner end of the cargo hold (1) during loading, and away from it during unloading, with the front end of said transport means (14) reaching into the range of the cargo hold opening inside the fuselage, and
a ground-supported conveyor organ (4) connecting to the cargo hold opening on the outside of the plane for transporting the loose cargo between the level of the tarmac and the cargo hold opening, and
an intermediate conveyor means (2) which is connectable with said external conveyor organ (4) and which is arranged between the plane-side end of said external conveyor organ (4) and the front end of said transport means (14), which covers the area of the floor of the cargo hold (1), in the cargo hold (1), whereby during loading, the loose cargo (6) may initially be conveyed deeper into the fuselage in a direction transversal to the longitudinal axis of the plane, and subsequently be conveyed in the longitudinal direction of the plane and deposited on the front end of said transport means (14) in the cargo hold (1), and whereby during unloading, loose cargo (6) conveyed beyond the front end of said transport means (14) into the plane of the cargo hold opening may be transported off transversely to the longitudinal axis of the plane through the cargo hold opening,
wherein
said intermediate conveyor means (2) comprises at least one first conveyor organ (8) provided as a conveyor belt and adapted to be modifiable in length in the conveying direction, which may be inserted into the cargo hold (1) and which receives the loose cargo (6) in the range of the cargo hold opening from the plane-side end of said external conveyor organ (4) and conveys it on transversely to the longitudinal axis of the plane during loading, wherein its end inside the fuselage is followed by another second conveyor organ (10, 10'), provided as a conveyor belt, which receives the loose cargo (6) from said first conveyor organ (8) and conveys it inside of the cargo hold (1) further in the longitudinal direction of the plane,
**characterized in that**
said another second conveyor organ (10, 10') of the intermediate conveyor means (2) is capable of being pivoted about an axis transversely to the conveying direction of the first conveyor organ (8) of the intermediate conveyor means (2), such that this second conveyor organ (10, 10') may be oriented horizontally, and said conveyor belt of said second conveyor organ (10, 10') runs over a rigid slide panel (18) arranged underneath of it, wherein
said slide panel (18) is displaceable guided in a rail-type guide structure (20) in the longitudinal direction of the conveyor organ (10, 10'), and
during unloading, said slide panel (18) with the conveyor belt may be inserted between two loose cargo items (6), and the upper loose cargo (6) may be transported off by means of the conveyor belt.

2. The system according Claim 1, **characterized in that** the loose cargo (6) may purposely be deposited on said transport means (14) in the cargo hold (1) during loading, and purposely transported away from there during unloading.

3. The system according any one of Claims 1 or 2, **characterized in that** a tray (24) covering the area of the floor of the cargo hold (1) and also of the floor-side range of the cargo hold opening is arranged in the range of the cargo hold opening above the floor of the cargo hold (1) horizontally between said intermediate conveyor means (2) and the floor of the cargo hold (1).

4. The system according to Claim 3, **characterized in that** said tray (24) is adapted to be folded along a line parallel to the longitudinal axis of the plane.

5. The system according to any one of Claims 1 to 4, **characterized in that** said transport means (14) in the cargo hold (1) is a transport carpet.

6. The system according to Claim 1, **characterized in that** said second conveyor organ (10, 10') receives loose cargo (6) from the front end of said transport means (14) present in the cargo hold (1) during unloading, transports it off in the longitudinal direction of the plane, and hands it over to said first conveyor organ (8) which conveys the loose cargo (6) transversely to the longitudinal axis of the plane to the cargo hold opening to hand it over to said external conveyor organ (4) for further transport.

7. The system according to Claim 1, **characterized in that** the end located inside the plane's fuselage of said first conveyor organ (8) of said intermediate conveyor means (2) is linked via a shoulder to first rail having a vertical orientation in the luggage cargo hold (1), so as to be vertically slidable along it for height adjustment in the luggage hold, and **in that** said vertically oriented first rail in turn is guided by at least one second rail having a horizontal orientation and fastened on the ceiling or on the floor, for displacing the linking point transversely to the longitudinal axis of the plane.

## Revendications

1. Système de chargement et de déchargement de marchandises de détail (6) dans un espace de chargement (1) d'un avion avec
un avion et
un dispositif de transport (14) recouvrant à plat le fond de l'espace de chargement (1) de l'avion pour le transport en particulier en cadence de marchandises de détail (6) en direction de l'extrémité intérieure de l'espace de chargement (1) lors du chargement ou loin de celle-ci lors du déchargement, le dispositif de transport (14) parvenant avec son extrémité avant jusque dans la zone de l'ouverture d'espace de chargement dans le fuselage, et avec
un organe de transport (4) en appui sur le fond, contigu sur le côté extérieur de l'avion à l'ouverture d'espace de chargement pour le transport des marchandises de détail entre le plan de la piste et l'ouverture d'espace de chargement, et
un dispositif de transport intermédiaire (2) qui peut être relié à l'organe de transport (4) extérieur et qui est disposé entre l'extrémité côté avion de l'organe de transport extérieur (4) et l'extrémité avant du dispositif de transport (14) recouvrant à plat le fond de l'espace de chargement (1) dans l'espace de chargement (1), avec lequel les marchandises de détail (6) peuvent être transportées lors du chargement tout d'abord dans le sens transversal à l'axe longitudinal d'avion plus profondément dans le fuselage et peuvent être transportées ensuite dans le sens longitudinal de l'avion et peuvent être déposées sur l'extrémité avant du dispositif de transport (14) dans l'espace de chargement (1), et avec lequel lors du déchargement, des marchandises de détail (6) transportées au-delà de l'extrémité avant du dispositif de transport (14) dans le plan de l'ouverture d'espace de chargement peuvent être transportées transversalement à l'axe longitudinal de l'avion au travers de l'ouverture d'espace de chargement,
le dispositif de transport intermédiaire (2) présentant au moins un premier organe de transport (8) réalisé comme une bande transporteuse, modifiable en longueur dans le sens de transport, qui peut être introduit dans l'espace de chargement (1), et qui reçoit lors du chargement des marchandises de détail (6) dans la zone de l'ouverture d'espace de chargement de l'extrémité côté avion de l'organe de transport (4) extérieur et continue de les transporter transversalement à l'axe longitudinal de l'avion, à son extrémité intérieure au fuselage étant contigu un autre second organe de transport (10, 10') réalisé comme une bande transporteuse qui reçoit les marchandises de détail (6) du premier organe de transport (8) et continue de les transporter dans l'espace de chargement (1) dans le sens longitudinal de l'avion,
**caractérisé en ce que**
l'autre second organe de transport (10, 10') du dispositif de transport intermédiaire (2) peut être pivoté autour d'un axe transversalement au sens de transport du premier organe de transport (8) du dispositif de transport intermédiaire (2) de telle manière que ce second organe de transport (0, 10') peut être orienté horizontalement, et
la bande transporteuse du second organe de transport (10, 10') s'étend sur une plaque glissante (18) rigide disposée dessous,
la plaque glissante (18) étant guidée de manière coulissante dans une structure de guidage (20) sur rail dans le sens longitudinal du second organe de transport (10, 10'), et
lors du déchargement, la plaque glissante (18) pouvant être insérée avec la bande transporteuse entre deux marchandises de détail (6) et la marchandise de détail supérieure (6) pouvant être transportée avec la bande transporteuse.

2. Système selon la revendication 1, **caractérisé en ce que** les marchandises de détail (6) peuvent être déposées de manière ciblée sur le dispositif de transport (14) dans l'espace de chargement (1) lors du chargement et transportée de là de manière ciblée lors du déchargement.

3. Système selon l'une quelconque des revendications 1 ou 2, **caractérisé en ce qu'**une coque (24) recouvrant à plat le fond de l'espace de chargement (1) mais aussi la zone côté fond de l'ouverture d'espace de chargement est disposée sur le fond de l'espace de chargement (1) horizontalement entre le dispositif de transport intermédiaire (2) et le fond de l'espace de chargement (1) dans la zone de l'ouverture d'espace de chargement.

4. Système selon la revendication 3, **caractérisé en ce que** la coque (24) peut être rabattue le long d'une ligne parallèlement à l'axe longitudinal de l'avion.

5. Système selon l'une quelconque des revendications 1 à 4, **caractérisé en ce que** le dispositif de transport (14) dans l'espace de chargement (1) est un tapis de transport.

6. Système selon la revendication 1, **caractérisé en ce que** le second organe de transport (10, 10') reçoit lors du déchargement des marchandises de détail (6) de l'extrémité avant du dispositif de transport (14) présent dans l'espace de chargement (1) et les transporte dans le sens longitudinal de l'avion et les transmet au premier organe de transport (8) qui transporte les marchandises de détail (6) transversalement à l'axe longitudinal de l'avion vers l'ouverture d'espace de chargement et les transmet à l'organe de transport (4) extérieur pour la suite du transport.

7. Système selon la revendication 1, **caractérisé en ce que** l'extrémité intérieure au fuselage du premier organe de transport (8) du dispositif de transport intermédiaire (2) est articulée de manière mobile verticalement par le biais d'un épaulement à un premier rail orienté perpendiculairement dans l'espace de chargement des bagages (1) le long de celui-ci pour le réglage en hauteur dans l'espace de chargement des bagages, et **en ce que** le premier rail orienté perpendiculairement est guidé de son côté par au moins un second rail orienté horizontalement fixé sur le plafond ou le fond pour le déplacement du point d'articulation transversalement à l'axe longitudinal de l'avion.
